(19) Europäisches Patentamt / European Patent Office / Office européen des brevets

(11) **EP 3 768 768 B1**

(12) **FASCICULE DE BREVET EUROPEEN**

(45) Date de publication et mention de la délivrance du brevet:
**25.06.2025 Bulletin 2025/26**

(21) Numéro de dépôt: **19717189.5**

(22) Date de dépôt: **19.03.2019**

(51) Classification Internationale des Brevets (IPC):
**C08J 5/04** *(2006.01)*     **B29C 70/52** *(2006.01)*
**C08J 5/24** *(2006.01)*

(52) Classification Coopérative des Brevets (CPC):
**C08J 5/042; B29C 70/521; C08J 5/243;**
**C08J 5/249;** B29K 2101/10; C08J 2300/22;
C08J 2300/24; C08J 2377/06

(86) Numéro de dépôt international:
**PCT/FR2019/050620**

(87) Numéro de publication internationale:
**WO 2019/180370 (26.09.2019 Gazette 2019/39)**

(54) **MATERIAU FIBREUX IMPREGNE DE POLYMERE THERMOPLASTIQUE ET D'EPAISSEUR INFERIEURE OU EGALE A 100 MICROMETRE ET SON PROCEDE DE PREPARATION**

FASERMATERIAL IMPREGNIERT MIT THERMOPLASTISCHEM POLYMER UND MIT EINER DICKE VON WENIGER ALS ODER GLEICH 100 MIKROMETER, UND SEIN HERSTELLUNGSVERFAHREN

FIBROUS MATERIAL IMPREGNATED WITH THERMOPLASTIC POLYMER AND HAVING A THICKNESS LOWER THAN OR EQUAL TO 100 MICROMETRES, AND ITS PREPARATION PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2018 FR 1852551**

(43) Date de publication de la demande:
**27.01.2021 Bulletin 2021/04**

(73) Titulaire: **ARKEMA FRANCE**
**92800 Puteaux (FR)**

(72) Inventeurs:
- **HOCHSTETTER, Gilles**
  **92705 COLOMBES CEDEX (FR)**
- **SAVART, Thibaut**
  **64170 LACQ (FR)**
- **BABEAU, Arthur Pierre**
  **64170 LACQ (FR)**
- **FLORENCIE, Anthony**
  **64000 Pau (FR)**
- **GAILLARD, Patrice**
  **64170 LACQ (FR)**
- **SALINIER, Axel**
  **64170 LACQ (FR)**

(74) Mandataire: **Arkema Patent**
**Arkema France**
**DRD-DPI**
**51, Esplanade du Général de Gaulle**
**CS 10478**
**92907 Paris La Défense Cedex (FR)**

(56) Documents cités:
EP-A- 0 287 427     EP-A1- 3 418 019
WO-A2-2015/121583     US-A1- 2014 005 331
US-A1- 2017 183 465

- YAMASHITA SHINICHIRO ET AL: "Volume resistivity of ultra-thin chopped carbon fiber tape reinforced thermoplastics", COMPOSITES PART A: APPLIED SCIENCE AND MANUFACTURING, ELSEVIER, AMSTERDAM, NL, vol. 90, 22 August 2016 (2016-08-22), pages 598 - 605, XP029737687, ISSN: 1359-835X, DOI: 10.1016/J.COMPOSITESA.2016.08.027

EP 3 768 768 B1

**Description**

[Domaine de l'invention]

La présente invention concerne un matériau fibreux d'épaisseur moyenne inférieure ou égale à 100μm, monocouche, imprégné de polymère thermoplastique.

Plus particulièrement, l'invention se rapporte à un matériau fibreux, monocouche, imprégné de polymère thermoplastique, dans lequel en particulier le nombre de fibres pour des fibres de carbone est supérieur ou égal à 12K, ou le grammage pour la fibre de verre est supérieur ou égal à 1200 Tex, et dont le taux de fibres en volume est notamment constant, en particulier le taux de fibres en volume est constant dans au moins 70% du volume du matériau fibreux imprégné.

L'invention se rapporte également à son procédé de préparation d'un matériau fibreux d'épaisseur moyenne inférieure ou égale à 100μm, monocouche et à son utilisation pour la fabrication de pièces composites en particulier par dépose automatique au moyen d'un robot ou en procédé d'enroulement filamentaire.

Dans la présente description, on entend par « matériau fibreux » un assemblage de fibres unitaires de renfort. Après imprégnation par la résine, il se présente sous forme de ruban

On entend par ruban un feuillard qui est un semi produit de faible épaisseur, non calibré en largeur et en épaisseur, et composé d'une seule mèche de fibres, ou une tape mince composée d'une ou plusieurs mèches de fibres, calibrée en épaisseur et en largeur.

Dans tous les cas, le ruban a une épaisseur inférieure ou égale à 100 μm, de préférence comprise de 10 à 100 μm.

De tels matériaux fibreux imprégnés sont notamment destinés à la réalisation de matériaux composites légers pour la fabrication de pièces mécaniques ayant une structure à trois dimensions et possédant de bonnes propriétés mécaniques et thermiques. Lorsque les fibres sont en carbone et/ou que la résine est chargée d'additifs adaptés, ces matériaux fibreux sont capables d'évacuer des charges électrostatiques. L'utilisation de résines ignifuges ou d'additifs ignifuges dans des résines qui ne le sont pas, permettent aux matériaux fibreux imprégnés d'être résistants au feu. Ils possèdent donc des propriétés compatibles avec la fabrication de pièces notamment dans les domaines de la mécanique, de l'aéronautique, du nautique, de l'automobile, du pétrole et du gaz, en particulier l'offshore, du stockage de gaz, de l'énergie, de la santé et du médical, des sports et loisirs et de l'électronique.

De tels matériaux fibreux imprégnés sont également appelés matériaux composites. Ils comprennent le matériau fibreux, constitué des fibres de renfort, et d'une matrice constituée par le polymère imprégnant les fibres. Le premier rôle de cette matrice est de maintenir les fibres de renfort dans une forme compacte et de donner la forme voulue au produit final. Cette matrice assure également le transfert de charge entre les fibres et donc, conditionne la résistance mécanique du composite. Une telle matrice sert également à protéger les fibres de renfort contre l'abrasion et un environnement agressif, à contrôler l'aspect de surface et à disperser d'éventuelles charges entre les fibres. Le rôle de cette matrice est important pour la tenue à long terme du matériau composite, notamment en ce qui concerne la fatigue et le fluage.

[Art antérieur]

Une bonne qualité des pièces composites tridimensionnelles fabriquées à partir de matériaux fibreux imprégnés passe notamment par une maîtrise du procédé d'imprégnation des fibres de renfort par le polymère thermoplastique et donc du matériau fibreux imprégné obtenu.

Jusqu'à présent, la fabrication de rubans de matériaux fibreux renforcés par imprégnation de polymère thermoplastique ou de polymère thermodurcissable s'effectuait suivant plusieurs procédés qui dépendent notamment de la nature du polymère, du type de matériau composite final souhaité et de son domaine d'applications, certains de ces procédés étant constitués d'une étape d'imprégnation suivie d'une étape de calandrage à chaud du matériau fibreux imprégné ou d'une étape de séchage éventuellement suivie d'une étape de fusion du polymère thermoplastique.

Ainsi les technologies d'imprégnation en voie humide ou au moyen d'un précurseur liquide ou de très faible viscosité, polymérisant in situ, sont souvent utilisées pour imprégner les fibres de renfort par des polymères thermodurcissables, comme les résines époxy par exemple, tel que décrit dans le brevet WO2012/066241A2. Ces technologies ne sont généralement pas applicables directement à l'imprégnation par des polymères thermoplastiques, car ceux-ci disposent rarement de précurseurs liquides,

Les procédés d'imprégnation par extrusion en tête d'équerre d'un polymère fondu sont adaptés à l'utilisation des polymères thermoplastiques de faible viscosité uniquement. Les polymères thermoplastiques, en particulier ceux à haute température de transition vitreuse ont une viscosité à l'état fondu trop importante pour permettre une imprégnation satisfaisante des fibres et des produits semi-finis ou finis de bonne qualité.

La demande US 2014/0005331A1 décrit un procédé de préparation de fibres imprégnées avec une résine polymère, le ruban obtenu étant asymétrique, c'est-à-dire qu'il possède une face riche en polymère et une face opposée riche en fibres.

Le procédé s'effectue par voie fondue avec un dispositif ne permettant l'imprégnation majoritaire que sur l'une des faces.

Un autre procédé connu d'imprégnation est le passage en continu des fibres dans une dispersion aqueuse de poudre polymère ou dispersion aqueuse de particules de polymère ou émulsion ou suspension aqueuse de polymère. On peut par exemple se référer au document EP0324680. On utilise dans ce procédé une dispersion de poudres de taille micrométrique (environ 20 $\mu$m). Après trempage dans la solution aqueuse, les fibres sont imprégnées par la poudre polymère. Le procédé implique alors une étape de séchage consistant à faire passer les fibres imprégnées dans un premier four afin d'évaporer l'eau absorbée pendant le trempage. Une étape de traitement thermique, consistant à faire passer les fibres imprégnées et séchées dans une seconde zone de chauffage, à haute température, est ensuite nécessaire pour fondre le polymère afin qu'il adhère, se répartisse et recouvre les fibres.

L'étape de séchage de cette méthode induit une porosité dans les fibres imprégnées par évaporation de l'eau. De plus, le matériau obtenu est un matériau fibreux recouvert de polymère et donc un matériau multicouche.

Le document EP 0 406 067, déposé aux noms conjoints d'Atochem et de l'Etat Français, ainsi que le document EP0 201 367 décrivent quant à eux une technique d'imprégnation sur lit fluidisé de poudre de polymère. Les fibres pénètrent dans une cuve de fluidisation fermée où, en ce qui concerne EP 0 406 067, elles sont éventuellement séparées les unes des autres au moyen de galets ou de cylindres cannelés, les fibres se chargeant électrostatiquement, par frottement au contact de ces galets ou cylindres. Cette charge électrostatique permet à la poudre de polymère de se coller en surface des fibres et ainsi de les imprégner.

Comme ci-dessus, le matériau obtenu est donc un matériau fibreux recouvert de polymère et donc un matériau multicouche.

La demande internationale WO 2016/062896 décrit un poudrage de mèche par un procédé électrostatique en charge volontaire, par mise à la masse de la mèche et application d'une différence de potentiel entre la pointe d'un pistolet ou buses de poudrage et la mèche.

La demande internationale WO 2015/121583 décrit un procédé de fabrication d'un matériau fibreux imprégné par imprégnation dudit matériau en lit fluidisé puis calandrage à chaud de ladite mèche permettant la mise en forme de ladite mèche ou desdites mèches parallèles dudit matériau.

Le calandrage à chaud est effectué en aval du dispositif d'imprégnation et permet d'homogénéiser la répartition du polymère et l'imprégnation des fibres mais ne permet pas d'obtenir un ruban imprégné de manière homogène. La porosité obtenue est non quantifiée.

La qualité des rubans de matériau fibreux imprégné, et donc la qualité du matériau composite final, dépend non seulement de l'homogénéité de l'imprégnation des fibres et donc du contrôle et de la reproductibilité de la porosité du matériau fibreux imprégné et de son aspect monocouche, mais également de la dimension et plus particulièrement de la largeur et de l'épaisseur des rubans finaux. Une régularité et un contrôle de ces paramètres dimensionnels permettent en effet d'améliorer la tenue mécanique des matériaux composites obtenus (à partir des rubans).

Les fibres pouvant entrer dans la composition des matériaux fibreux peuvent avoir des grammages linéiques ou titre ou titrage ou « tex » différents et/ou être en nombre différent dans les mèches. Aussi, les mèches les plus classiquement utilisées sont composées de 600 à 4800 tex pour les fibres de verre et de 3000 (3K), 6000 (6K), 12000 12K), 24000 (24K), 48000 (48K), 50 000 (50K) ou 400 000(400K) pour les fibres de carbone. Les fibres de carbone présentent généralement un diamètre proche de 7-8 $\mu$m et les fibres de verre un diamètre d'environ 13, 15, 17 ou 20 $\mu$m par exemple.

La pratique la plus courante pour fabriquer des nappes est basée sur un assemblage de mèches et de résine, afin de former un volume de matière composite, cependant celui-ci est supérieur à celui de la nappe que l'on souhaite fabriquer. Ce volume est mis en œuvre par calandrage sous forme d'une nappe calibrée en épaisseur, présentant l'épaisseur recherchée mais qui sera plus large que la nappe finale et qui présentera généralement des bords irréguliers. Cette nappe est ensuite découpée (opération de slitting) pour obtenir la nappe finale calibrée à la largeur souhaitée, autrement appelée nappe calibrée.

Lorsque l'on souhaite supprimer l'opération de découpe (opération de slitting) pour éviter les chutes de matière, l'endommagement des fibres ou le coût d'une étape supplémentaire dans la fabrication de la nappe, on supprime l'étape de fabrication de la nappe et l'on fait un assemblage de mèches et de résine dont le volume correspond exactement au volume final de la nappe calibrée que l'on souhaite fabriquer. La conséquence majeure de ce type de procédé est que le volume de matière dépendra directement du grammage linéique des fibres et du taux de fibre. Pour cette raison, lorsque l'on fixe le taux de fibres, seul un nombre discret de volumes de matière sont réalisables et ils sont fonction des grammages des mèches disponibles au plan commercial.

Autrement dit, la nappe calibrée fabriquée sans slitting ne peut avoir n'importe quelle largeur ou épaisseur et le grammage en fibre de la nappe calibrée ne peut être égal qu'à un nombre entier de fois celui de la ou des mèches initiales.

Compte tenu de la demande des industriels, par exemple une demande d'un composite de 194g/m2 en fibres de carbone et contenant 34% en poids d'une résine de densité 1,29, la nappe calibrée présente généralement une épaisseur de 190$\mu$m environ et une largeur d'environ 300mm et nécessite l'utilisation de 72 mèches de 12K.

Dans les procédés usuels, la nappe est fabriquée par assemblage de mèches de fibres sèches qui sont ensuite imprégnées de résine et la nappe obtenue est ensuite découpée (slitting). Néanmoins, lorsque l'on veut fabriquer cette nappe avec une grande vitesse de production, l'imprégnation de nappes de cette épaisseur ne s'effectue pas correctement à cœur des mèches et ne permet pas l'obtention d'une imprégnation homogène des mèches.

Les techniques actuelles d'imprégnation de matériaux fibreux et de mise en forme de tels matériaux fibreux imprégnés sous forme de nappes calibrées présentent en outre plusieurs autres inconvénients.

La découpe d'une nappe pour l'obtention de rubans implique un raboutage de ces rubans car cette nappe est généralement d'une longueur limitée à une fraction de la longueur des bobines de mèches de fibres sèches, ce, à cause de son poids et des problèmes de manutention que cela occasionne. Le raboutage induit un coût supplémentaire de fabrication pour le ruban ainsi que des défauts de fabrication dans les pièces composites finales qui peuvent initier leur rupture prématurée.

Outre les inconvénients mentionnés ci-dessus, la découpe des nappes (slitting) génère des problèmes importants de fibres coupées et des fibrilles mises à nues pouvant générer des poussières et des arcs électriques lors de la dépose robot et peuvent entrainer des dysfonctionnements des robots et/ou des imperfections sur les composites. Ceci entraine potentiellement des coûts de réparation des robots, un arrêt de la production et la mise au rebut des produits non conformes. Enfin, lors de l'étape de découpe, une quantité non négligeable de fibres est détériorée, induisant une perte de propriétés, et notamment une réduction de la résistance mécanique et de la conductivité, des tapes de matériau fibreux imprégné.

Il est donc nécessaire de pouvoir disposer de matériau fibreux non découpée et non raboutée (c'est-à-dire présentant environ la longueur de la mèche de fibre sèche initiale), et bien imprégné même lors d'une fabrication à grande vitesse de production, notamment de ruban sous forme d'un feuillard de largeur et épaisseur variables ou d'une tape mince présentant une largeur et une épaisseur calibrées, l'épaisseur moyenne du feuillard ou de la tape mince étant inférieure ou égale à 100$\mu$m de manière à garantir même lors d'une fabrication à grande vitesse de production, une imprégnation homogène et à cœur des mèches de fibres, et ce, quel que soit le nombre de filaments présents dans les mèches du matériau fibreux initial avant imprégnation.

L'invention a donc pour but de remédier à au moins un des inconvénients de l'art antérieur et notamment a pour but l'obtention d'un matériau fibreux imprégné tel que ci-dessus défini,

L'invention vise notamment à proposer un matériau fibreux imprégné, monocouche, et en particulier dont le nombre de fibres pour des fibres de carbone est supérieur ou égal à 12K, ou le grammage pour la fibre de verre est supérieur ou égal à 1200 Tex, notamment supérieur ou égal à 2400 Tex, supérieur ou égal à 4800 Tex, et dont le taux de fibres en volume est notamment constant dans au moins 70% du volume du matériau fibreux imprégné, l'imprégnation des fibres étant homogène, ledit matériau ayant des dimensions contrôlées, avec une porosité réduite, contrôlée et reproductible ainsi qu'une répartition homogène des fibres dudit matériau fibreux dans le matériaux fibreux imprégné, dont dépendent les performances de la pièce composite finale.

[Brève description de l'invention]

A cet effet, l'invention a pour objet un matériau fibreux imprégné comprenant au moins un matériau fibreux en fibres continues et :

- au moins une matrice de polymère thermoplastique non réactif, ou

- au moins un prépolymère thermoplastique réactif, précurseur dudit polymère thermoplastique non réactif, optionnellement mélangé à un allongeur de chaîne, caractérisé en ce que ledit au moins polymère thermoplastique non réactif ou le dit prépolymère réactif est un polymère ou prépolymère amorphe dont la température de transition vitreuse est telle que Tg $\geq$ 80°C, notamment Tg $\geq$ 100°C, en particulier$\geq$ 120°C, notamment $\geq$ 140°C, ou est un polymère ou prépolymère semi-cristallin dont la température de fusion Tf $\geq$ 150°C, le taux de fibres dans ledit matériau fibreux imprégné étant compris de 45 à 65 % en volume, de préférence de 50 à 60% en volume, notamment de 54 à 60%, l'épaisseur moyenne dudit matériau fibreux imprégné étant inférieure ou égale à 100$\mu$m, indépendamment du nombre de fibres présentes dans ledit matériau fibreux avant imprégnation, ledit matériau fibreux étant monochouche. Avantageusement, le PA6 est exclu de la définition du polymère thermoplastique ou du prépolymère thermoplastique.

Avantageusement, l'épaisseur moyenne dudit matériau fibreux imprégné est comprise de 10$\mu$m à 100$\mu$m.

La mesure de l'épaisseur et de la largeur moyennes dudit matériau fibreux imprégné peut être effectuée par mesure Laser comme décrit dans WO 2016/062896.

Dans la présente description, on utilise le terme « feuillard » pour désigner un matériau fibreux imprégné de largeur et épaisseur non calibrées avec une épaisseur moyenne inférieure ou égale à 100$\mu$m.

Dans toute la description, la largeur du feuillard correspond à une largeur moyenne et l'épaisseur du feuillard correspond à une épaisseur moyenne, c'est-à-dire, une largeur et une épaisseur moyenne sur toute la longueur du feuillard. Cela signifie que la largeur et l'épaisseur peuvent varier le long du feuillard mais qu'en moyenne l'épaisseur est inférieure ou égale à 100$\mu$m. Le moyen de vérifier que l'épaisseur moyenne est inférieure à 100$\mu$m sur toute la longueur du feuillard est de faire des mesure sur des échantillons statistiquement représentatif du feuillard par des moyens de mesure non destructifs.

L'expression « largeur non calibrée » signifie que la largeur du feuillard n'est pas constante, la largeur pouvant être égale à l +/- 20%, notamment l +/- 15%, en particulier l +/-10% où l représente la largeur moyenne.

L'expression « épaisseur non calibrée » signifie que l'épaisseur du feuillard n'est pas constante sur toute sa longueur, l'épaisseur pouvant être égale à e +/- 20%, notamment e +/- 15%, en particulier e +/- 10% où e représente l'épaisseur moyenne.

Avantageusement, les expressions « largeur non calibrée » et « épaisseur non calibrée » signifient respectivement que la largeur est égale à l +/- 20% de la largeur moyenne et l'épaisseur est égale à e +/- 20% de l'épaisseur moyenne.

Avantageusement, les expressions « largeur non calibrée » et « épaisseur non calibrée » signifient respectivement que la largeur est égale à l +/- 20% de la largeur moyenne et l'épaisseur est égale à e +/- 15% de l'épaisseur moyenne.

Avantageusement, les expressions « largeur non calibrée » et « épaisseur non calibrée » signifient respectivement que la largeur est égale à l +/- 20% de la largeur moyenne et l'épaisseur est égale à e +/- 10% de l'épaisseur moyenne.

Avantageusement, les expressions « largeur non calibrée » et « épaisseur non calibrée » signifient respectivement que la largeur est égale à l +/- 15% de la largeur moyenne et l'épaisseur est égale à e +/- 20% de l'épaisseur moyenne.

Avantageusement, les expressions « largeur non calibrée » et « épaisseur non calibrée » signifient respectivement que la largeur est égale à l +/- 10% de la largeur moyenne et l'épaisseur est égale à e +/- 20% de l'épaisseur moyenne.

Avantageusement, les expressions « largeur non calibrée » et « épaisseur non calibrée » signifient respectivement que la largeur est égale à l +/- 15% de la largeur moyenne et l'épaisseur est égale à e +/- 15% de l'épaisseur moyenne.

Avantageusement, les expressions « largeur non calibrée » et « épaisseur non calibrée » signifient respectivement que la largeur est égale à l +/- 10% de la largeur moyenne et l'épaisseur est égale à e +/- 15% de l'épaisseur moyenne.

Avantageusement, les expressions « largeur non calibrée » et « épaisseur non calibrée » signifient respectivement que la largeur est égale à l +/- 15% de la largeur moyenne et l'épaisseur est égale à e +/- 10% de l'épaisseur moyenne.

Avantageusement, les expressions « largeur non calibrée » et « épaisseur non calibrée » signifient respectivement que la largeur est égale à l +/- 10% de la largeur moyenne et l'épaisseur est égale à e +/- 10% de l'épaisseur moyenne.

Néanmoins, la largeur moyenne du feuillard dépend du nombre de fibres présentes dans la mèche.

On utilise le terme « tape mince » pour désigner un matériau fibreux imprégné de largeur et d'épaisseur calibrées avec une épaisseur moyenne inférieure ou égale à 100μm.

Dans toute la description, la largeur de la tape mince correspond à une largeur moyenne et l'épaisseur de la tape mince correspond à une épaisseur moyenne, c'est-à-dire, une largeur et une épaisseur moyenne sur toute la longueur de la tape mince. Cela signifie que la largeur et l'épaisseur peuvent varier le long de la tape mince mais qu'en moyenne l'épaisseur est inférieure ou égale à 100μm. Le moyen de vérifier que l'épaisseur moyenne est inférieure à 100μm sur toute la longueur du feuillard est de faire des mesure sur des échantillons statistiquement représentatif de la tape mince par des moyens de mesure non destructifs. L'expression « largeur calibrée » signifie que la largeur de la tape mince est constante sur toute sa longueur, la largeur pouvant être l +/- 5%, en particulier l +/- 2% où l représente la largeur moyenne.

L'expression « épaisseur calibrée » signifie que l'épaisseur moyenne de la tape mince est constante sur toute sa longueur, et l'épaisseur pouvant être égale à e +/- 5%, en particulier l'épaisseur étant égale à e +/- 2% où e représente l'épaisseur moyenne.

Avantageusement, les expressions « largeur calibrée » et « épaisseur calibrée » signifient respectivement que la largeur est égale à l +/- 5% de la largeur moyenne et l'épaisseur est égale à e +/- 5% de l'épaisseur moyenne.

Avantageusement, les expressions « largeur calibrée » et « épaisseur calibrée » signifient respectivement que la largeur est égale à l +/- 5% de la largeur moyenne et l'épaisseur est égale à e +/- 2%.

Avantageusement, les expressions « largeur calibrée » et « épaisseur calibrée » signifient respectivement que la largeur est égale à l +/- 2% de la largeur moyenne et l'épaisseur est égale à e +/- 5% de l'épaisseur moyenne.

Avantageusement, les expressions « largeur calibrée » et « épaisseur calibrée » signifient respectivement que la largeur est égale à l +/- 2% de la largeur moyenne et l'épaisseur est égale à e +/- 2% de l'épaisseur moyenne.

Néanmoins, la largeur moyenne de la tape mince dépend du nombre de fibres présentes dans la mèche.

Avantageusement, le nombre de fibres dans ledit matériau fibreux pour des fibres de carbone est supérieur ou égal à 3K, en particulier supérieur ou égal à 6K, notamment supérieur ou égal à 12K.

Avantageusement, le nombre de fibres dans ledit matériau fibreux pour des fibres de carbone est supérieur ou égal à 12K, en particulier choisi parmi 12K, 24K, 48K, 50K et 400K, notamment 12K, 24K, 48K et 50K ou le grammage pour la fibre de verre est supérieur ou égal à 1200 Tex, notamment supérieur ou égal à 2400 Tex, supérieur ou égal à 4800 Tex.

Le Tex signifie que 1000 m de fil de base pèsent 1 gr.

Les inventeurs ont donc trouvé que quelle que soit la mèche de départ, c'est-à-dire, quel que soit le nombre de filaments ou de fibres dans la mèche de départ, pour des taux de fibres élevés supérieurs à 45% en volume, l'imprégnation n'est correctement effectuée, à grande vitesse de production, que si le feuillard ou la tape mince présentent une épaisseur moyenne inférieure ou égale à 100µm.

Il est bien évident que si l'on fixe l'épaisseur moyenne et la largeur moyenne désirée (en supposant un taux de porosité négligeable), il est alors possible de déterminer le nombre de fibres nécessaires présentes dans la mèche.

Par exemple, pour une largeur moyenne de 50 mm (tape mince par exemple de polyamide) avec un taux de fibres de carbone de 50% en volume et une épaisseur moyenne de 100µm, il sera nécessaire d'utiliser une mèche de 50K.

Pour une largeur moyenne de 50 mm (tape mince par exemple de polyamide) avec un taux de fibres de carbone de 62% en volume et une épaisseur moyenne de 60µm, il sera nécessaire d'utiliser une mèche de 48K.

La mèche utilisée est donc une monomèche par opposition à une multimèche qui correspondrait alors à une association de tape ou nappe mince réalisés à partir de chacune des mèches composant la multi-mèche.

Avantageusement, en l'absence de réchauffage, le matériau fibreux imprégné est non flexible.

Cela signifie que le matériau fibreux imprégné n'est pas capable d'épouser une forme complexe à température ambiante et qu'il ne peut le faire qu'au-delà de la Tf de la résine. En d'autres termes, le matériau fibreux imprégné ne présente pas de drapabilité.

Les fibres du matériau fibreux peuvent être ensimées ou non.

L'ensimage désigne les traitements de surface appliqués aux fibres de renfort en sortie de filière (ensimage textile) et sur les tissus (ensimage plastique).

L'ensimage "textile" appliqué sur les filaments, en sortie de filière consiste à déposer un agent de liaison assurant la cohésion des filaments entre eux, diminuant l'abrasion et facilitant les manipulations ultérieures (tissage) et évitant la formation de charges électrostatiques. L'ensimage peut être réalisé sur la surface des fibres, par exemple par dépôt de résine époxyde en solution sur des fibres de carbone.

Avantageusement, les fibres du matériau fibreux sont non ensimées.

Le terme « non ensimé » signifie que la fibre est soit non ensimée à l'origine et qu'elle n'a donc pas subi de traitement de surface, ou bien que la fibre a été dé-ensimée avant son utilisation.

Avantageusement, le taux de fibres en volume est constant dans au moins 70% du volume matériau fibreux imprégné, notamment dans au moins 80% du volume du matériau fibreux imprégné, en particulier dans au moins 90% du volume du matériau fibreux imprégné, plus particulièrement dans au moins 95% du volume du matériau fibreux imprégné.

Avantageusement, la répartition des fibres est homogène dans au moins 95% du volume du matériau fibreux imprégné.

La mesure du taux de fibres en volume est effectuée localement sur un volume élémentaire représentatif (VER).

Le terme « constant » signifie que le taux de fibres en volume est constant à l'incertitude de mesure près qui est de plus ou moins 1%.

Le terme « homogène » signifie que l'imprégnation est uniforme et qu'il n'y a pas de fibres sèches, c'est-à-dire, non imprégnée, et qu'il n'y a pas à l'inverse de zone de résine pure sans fibre dans au moins 95% du volume du ruban de matériau fibreux imprégné.

Avantageusement, le taux de porosité dans ledit matériau fibreux imprégné est inférieur à 10%, notamment inférieur à 5%, en particulier inférieur à 2%.

Ledit matériau fibreux imprégné est monocouche.

Le terme « monocouche » signifie que lorsque l'imprégnation du matériau fibreux est effectuée, l'imprégnation s'étant effectuée de manière particulièrement homogène et à cœur, et notamment avec au moins un épanouissement lors de l'imprégnation, ledit matériau fibreux et le polymère sont indissociables l'un de l'autre et forment un matériau constitué d'une seule couche à base de fibres et polymère.

Les différentes caractéristiques d'épaisseur, de nombre de fibres, de taux de fibres, d'ensimage, de répartition des fibres et la caractéristique monocouche sont combinables chacune ou l'une avec une ou plusieurs autres en combinaisons avec celles de l'objet de l'invention et peuvent faire l'objet d'autant de modes de réalisation que de combinaisons possibles qui font partie intégrante de l'invention.

## Matrice polymère

On entend par thermoplastique, ou polymère thermoplastique, un matériau généralement solide à température ambiante, pouvant être semi-cristallin ou amorphe, et qui se ramollit lors d'une augmentation de température, en particulier après passage de sa température de transition vitreuse (Tg) et s'écoule à plus haute température lorsqu'il est amorphe, ou pouvant présenter une fusion franche au passage de sa température dite de fusion (Tf) lorsqu'il est semi-cristallin, et qui redevient solide lors d'une diminution de température en dessous de sa température de cristallisation (pour un semi-cristallin) et en dessous de sa température de transition vitreuse (pour un amorphe).

La Tg et la Tf sont déterminées par analyse calorimétrique différentielle (DSC) selon la norme 11357-2 :2013 et 11357-3 :2013 respectivement.

Concernant le polymère de constitution de la matrice de pré-imprégnation du matériau fibreux, c'est avantageusement un polymère thermoplastique ou un mélange de polymères thermoplastiques. Ce polymère ou mélange de polymères thermoplastiques peut être broyé sous forme de poudre, afin de pouvoir l'utiliser dans un dispositif tel qu'une cuve, notamment en lit fluidisé ou en dispersion aqueuse.

Avantageusement, le PA6 est exclu de la définition du polymère thermoplastique.

Le dispositif sous forme de cuve, notamment en lit fluidisé peut être ouvert ou fermé.

De manière facultative, le polymère thermoplastique ou mélange de polymères thermoplastiques comprend en outre des charges carbonées, en particulier du noir de carbone ou des nanocharges carbonées, de préférence choisies parmi des graphènes, des nanotubes de carbone, des nanofibrilles de carbone ou leurs mélanges. Ces charges permettent de conduire l'électricité et/ou la chaleur, et permettent par conséquent de faciliter la fusion de la matrice polymère lorsqu'elle est chauffée.

Optionnellement, ledit polymère thermoplastique comprend au moins un additif, notamment choisi parmi un catalyseur, un antioxydant, un stabilisant thermique, un stabilisant UV, un stabilisant à la lumière, un lubrifiant, une charge, un plastifiant, un agent ignifugeant, un agent nucléant, un allongeur de chaîne et un colorant, un agent conducteur électrique, un agent conducteur thermique ou un mélange de ceux-ci.

Avantageusement, ledit additif est choisi parmi un agent ignifugeant, un agent conducteur électrique et un agent conducteur thermique.

Selon une autre variante, le polymère thermoplastique ou mélange de polymères thermoplastiques peut en outre comprendre des polymères à cristaux liquides ou du poly(butylène téréphtalate) cyclisé, ou des mélanges en contenant, comme la résine CBT100 commercialisée par la société CYCLICS CORPORATION. Ces composés permettent notamment de fluidifier la matrice polymère à l'état fondu, pour une meilleure pénétration au cœur des fibres. Selon la nature du polymère, ou mélange de polymères thermoplastiques, utilisé pour réaliser la matrice de pré-imprégnation, notamment sa température de fusion, on choisira l'un ou l'autre de ces composés.

Les polymères thermoplastiques entrant dans la constitution de la matrice de préimprégnation du matériau fibreux, peuvent être choisis parmi :

- les polymères et copolymères de la famille des polyamides (PA) aliphatiques, cycloaliphatiques ou des PA semi-aromatiques (encore dénommés polyphtalamides (PPA)),
- les polyurées, en particulier aromatiques,
- les polymères et copolymères de la famille des acryliques comme les polyacrylates, et plus particulièrement le polyméthacrylate de méthyle (PMMA) ou ses dérivés
- les polymères et copolymères de la famille des poly(aryléthercétones) (PAEK) comme le poly(étheréthercétone) (PEEK), ou les poly(aryléthercétonescétones) (PAEKK) comme le poly(éthercétonecétone) (PEKK) ou leurs dérivés,
- les polyéther-imides (PEI) aromatiques,
- les polyarylsulfures, en particulier les polyphénylène sulfures (PPS),
- les polyarylsulfones, en particulier les polyphénylène sulfones (PPSU),
- les polyoléfines, en particulier le polypropylène (PP);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE),

et leurs mélanges.

Avantageusement, le PA6 est exclu de la définition des polyamides aliphatiques.

Avantageusement, lorsque ledit polymère est un mélange de deux polymères P1 et P2, la proportion en poids de polymère P1 et P2 est comprise de 1-99% à 99-1%.

Avantageusement, lorsque ledit polymère thermoplastique est un mélange, et que le procédé de pré-imprégnation utilise une poudre sèche, ce mélange se présente sous forme d'une poudre obtenue soit par « dry blend » avant introduction dans la cuve de pré-imprégnation ou par « dry blend » réalisé directement dans la cuve ou encore, par broyage d'un compound réalisé au préalable en extrudeuse.

Avantageusement, ce mélange est composé d'une poudre obtenue par « dry blend », avant l'introduction dans la cuve ou directement dans la cuve, et ce mélange de deux polymères P1 et P2 est un mélange de PEKK et de PEI.

Avantageusement, le mélange PEKK/PEI est compris de 90-10% à 60-40% en poids, en particulier de 90-10% à 70-30% en poids.

Le polymère thermoplastique peut correspondre au polymère final non réactif qui imprégnera le matériau fibreux ou à un prépolymère réactif, qui imprégnera également le matériau fibreux, mais est susceptible de réagir sur lui-même ou avec un autre prépolymère, en fonction des fins de chaîne portées par ledit prépolymère, après pré-imprégnation, ou encore avec un allongeur de chaîne et notamment lors d'un chauffage au niveau d'une calandre chauffante pour conduire audit polymère final non réactif, ou bien encore à un prépolymère thermoplastique réactif partiellement polymérisé, optionnellement avec le dit allongeur de chaîne, et présentant une masse moléculaire moyenne en nombre (Mn) allant de 500 à 10000, de préférence de 4000 à 8000. Ledit prépolymère thermoplastique réactif partiellement polymérisé est susceptible de conduire audit polymère final non réactif par chauffage dépendant de la Tg et/ou Tf du polymère utilisé.

L'expression « polymère non réactif » signifie que le poids moléculaire n'est plus susceptible d'évoluer significativement, c'est-à-dire que sa masse moléculaire en nombre (Mn) évolue de moins de 50% lors de sa mise en œuvre et correspond donc au polymère polyamide final de la matrice thermoplastique.

A l'opposé, l'expression « polymère réactif » signifie que le poids moléculaire dudit polymère réactif va évoluer durant la mise en œuvre par réaction de prépolymères réactifs entre eux par condensation, substitution ou avec un allongeur de chaîne par polyaddition et sans élimination de sous-produits volatils pour conduire au polymère polyamide final (non réactif) de la matrice thermoplastique.

Selon une première possibilité, ledit prépolymère peut comprendre ou être constituée de, au moins un prépolymère (polyamide) réactif porteur sur la même chaîne (c'est-à-dire sur le même prépolymère), de deux fonctions terminales X' et Y' fonctions respectivement coréactives entre elles par condensation, plus particulièrement avec X' et Y' étant amine et carboxy ou carboxy et amine respectivement.

Dans cette première possibilité, ledit au moins un prépolymère thermoplastique réactif peut être partiellement polymérisé, optionnellement avec le dit allongeur de chaîne, et présente une masse moléculaire moyenne en nombre (Mn) allant de 500 à 10000, de préférence de 4000 à 8000.

Selon une deuxième possibilité, ledit prépolymère peut comprendre ou être constituée de, au moins deux prépolymères polyamides réactifs entre eux et porteurs chacun respectivement de deux fonctions terminales X' ou Y', identiques (identiques pour même prépolymère et différentes entre les deux prépolymères), ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement.

Dans cette deuxième possibilité, ledit au moins un prépolymère thermoplastique réactif peut être partiellement polymérisé, optionnellement avec le dit allongeur de chaîne, et présente une masse moléculaire moyenne en nombre (Mn) allant de 500 à 10000, de préférence de 4000 à 8000.

Selon une troisième possibilité, ledit prépolymère peut comprendre ou être constituée de, au moins un prépolymère dudit polymère polyamide thermoplastique, porteur de n fonctions réactives terminales X, choisies parmi : -NH$_2$, -CO$_2$H et -OH, de préférence NH$_2$ et -CO$_2$H avec n étant 1 à 3, de préférence de 1 à 2, plus préférentiellement 1 ou 2, plus particulièrement 2 et au moins un allongeur de chaîne Y-A'-Y, avec A' étant un biradical hydrocarboné, porteur de 2 fonctions réactives terminales Y identiques, réactives par polyaddition avec au moins une fonction X dudit prépolymère a1), de préférence de masse moléculaire inférieure à 500, plus préférentiellement inférieure à 400.

Dans cette deuxième possibilité, ledit au moins un prépolymère thermoplastique réactif peut être partiellement polymérisé, optionnellement avec le dit allongeur de chaîne, et présente une masse moléculaire moyenne en nombre (Mn) allant de 500 à 10000, de préférence de 4000 à 8000.

La masse moléculaire moyenne en nombre Mn dudit polymère final de la matrice thermoplastique est de préférence dans une plage allant de 10000 à 40000, de préférence de 12000 à 30000. Ces valeurs Mn peuvent correspondre à des viscosités inhérentes supérieures ou égales à 0,8 telle que déterminées dans le m-crésol selon la norme ISO 307:2007 mais en changeant le solvant (utilisation du m-crésol à la place de l'acide sulfurique et la température étant de 20°C).

Lesdits prépolymères réactifs selon les deux options citées plus haut, ont une masse moléculaire moyenne en nombre Mn allant de 500 à 10000, de préférence de 1000 à 6000, en particulier de 2500 à 6000.

Les Mn sont déterminées en particulier par le calcul à partir du taux des fonctions terminales déterminé par titration potentiométrique en solution et la fonctionnalité desdits prépolymères. Les masses Mn peuvent également être déterminées par chromatographie d'exclusion stérique ou par RMN.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Le polyamide peut être un homopolyamide ou un copolyamide ou un mélange de ceux-ci.

Avantageusement, les prépolymères de constitution de la matrice sont choisis parmi les Polyamides (PA), en particulier choisis parmi les polyamides aliphatiques, les polyamides cycloaliphatiques, et les polyamides semi-aromatiques (polyphthalamides) éventuellement modifiés par des motifs urées, et leur copolymères, le Polyméthacrylate de méthyle (PPMA) et ses copolymères, les Polyether imides (PEI), le Poly(sulfure de phénylène) (PPS), le Poly(sulfone de phénylène) (PPSU), le PVDF, le Poly(éthercétonecétone) (PEKK), le Poly(étheréthercétone) (PEEK), les polymères fluorés comme le poly(fluorure de vinylidène) (PVDF).

Avantageusement, le PA6 est exclu de la définition des polyamides aliphatiques. Pour les polymères fluorés, on peut utiliser un homopolymère du fluorure de vinylidène (VDF de formule CH$_2$=CF$_2$) ou un copolymère du VDF comprenant en poids au moins 50% en masse de VDF et au moins un autre monomère copolymérisable avec le VDF. La teneur en VDF doit être supérieure à 80% en masse, voire mieux 90% en masse, pour assurer une bonne résistance mécanique et chimique à la pièce de structure, surtout lorsqu'elle est soumise à des contraintes thermiques et chimiques. Le comonomère peut être un monomère fluoré tel que par exemple le fluorure de vinyle.

Pour des pièces de structure devant résister à des températures élevées, outre les polymères fluorés, on utilise avantageusement selon l'invention les PAEK (PolyArylEtherKetone) tels que les poly(éther cétones) PEK, le poly(éther éther cétone) PEEK, le poly(éther cétone cétone) PEKK, le Poly(éther cétone éther cétone cétone) PEKEKK ou les PA de haute température de transition vitreuse Tg).

Avantageusement, ledit polymère thermoplastique est un polymère amorphe dont la température de transition vitreuse est telle que $Tg \geq 80°C$, notamment$\geq 100°C$, en particulier $\geq 120°C$, notamment$\geq 140°C$, ou un polymère semi-cristallin dont la température de fusion Tf $\geq 150°C$.

Avantageusement, ledit au moins un prépolymère thermoplastique est sélectionné parmi les polyamides, le PEKK, le PEI et un mélange PEKK et de PEI.

Avantageusement, ledit polyamide est choisi parmi les polyamides aliphatiques, les polyamides cycloaliphatiques et les polyamides semi-aromatiques (polyphthalamides). Avantageusement, ledit prépolymère polyamide aliphatique est choisi parmi :

- le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), le polyamide 11/1010 et le polyamide 12/1010, ou un mélange de ceux-ci ou un copolyamide de ceux-ci, et les copolymères blocs, notamment polyamide/polyéther (PEBA), et ledit polyamide semi-aromatique est un polyamide semi-aromatique, éventuellement modifié par des unités urées, notamment un PA MXD6 et un PA MXD10 ou un polyamide semi-aromatique de formule X/YAr, tel que décrits dans EP1505099, notamment un polyamide semi-aromatique de formule A/XT dans laquelle A est choisi parmi un motif obtenu à partir d'au moins un aminoacide, un motif obtenu à partir d'au moins un lactame et au moins un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques;
  X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18, notamment un polyamide de formule A/6T, A/9T, A/10T ou A/11T, A étant tel que défini ci-dessus, en particulier un polyamide PA 6/6T, un PA 66/6T, un PA 6I/6T, un PA MPMDT/6T, un PA PA11/10T, un PA 11/6T/10T, un PA MXDT/10T, un PA MPMDT/10T, un PA BACT/10T, un PA BACT/6T, un PA 11/BACT, PA BACT/10T/6T.

T correspond à l'acide téréphtalique, MXD correspond à la m-xylylène diamine, MPMD correspond à la méthylpentaméthylène diamine et BAC correspond au bis(aminométhyl)cyclohexane.

Avantageusement, ledit prépolymère polyamide aliphatique est choisi parmi :

- le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), le polyamide 11/1010 et le polyamide 12/1010, ou un mélange de ceux-ci ou un copolyamide de ceux-ci, et les copolymères blocs, notamment polyamide/polyéther (PEBA), et ledit polyamide semi-aromatique est un polyamide semi-aromatique, éventuellement modifié par des unités urées, notamment un PA MXD6 et un PA MXD10 ou un polyamide semi-aromatique de formule X/YAr, tel que décrits dans EP1505099, notamment un polyamide semi-aromatique de formule A/XT dans laquelle A est choisi parmi un motif obtenu à partir d'au moins un aminoacide, un motif obtenu à partir d'au moins un lactame et au moins un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques;
  X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18, notamment un polyamide de formule A/6T, A/9T, A/10T ou A/11T, A étant tel que défini ci-dessus, en particulier un polyamide PA 6/6T, un PA 66/6T, un PA 6I/6T, un PA MPMDT/6T, un PA PA11/10T, un PA 11/6T/10T, un PA MXDT/10T, un PA MPMDT/10T, un PA BACT/10T, un PA BACT/6T, un PA 11/BACT, PA BACT/10T/6T.

T correspond à l'acide téréphtalique, MXD correspond à la m-xylylène diamine, MPMD correspond à la méthylpentaméthylène diamine et BAC correspond au bis(aminométhyl)cyclohexane.

Avantageusement, ledit polyamide est un polyamide semi-aromatique choisi parmi un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T.

**Matériau fibreux** :

Concernant les fibres de constitution dudit matériau fibreux, ce sont notamment des fibres continues d'origine minérale, organique ou végétale sous forme de mèches.

Avantageusement, le nombre de fibres dans ledit matériau fibreux pour des fibres de carbone est supérieur ou égal à 3K, en particulier supérieur ou égal à 6K, notamment supérieur ou égal à 12K.

Avantageusement, le nombre de fibres dans ledit matériau fibreux pour des fibres de carbone est supérieur ou égal à 12K, en particulier choisi parmi 12K, 24K, 48K, 50K et 400K, notamment 12K, 24K, 48 et 50K.

Avantageusement, le grammage pour la fibre de verre est supérieur ou égal à 1200 Tex, notamment supérieur ou égal à 2400 Tex, supérieur ou égal à 4800 Tex.

Parmi les fibres d'origine minérale, on peut citer les fibres de carbone, les fibres de verre, les fibres de basalte ou à base de basalte, les fibres de silice, ou les fibres de carbure de silicium par exemple. Parmi les fibres d'origine organique, on peut citer les fibres à base de polymère thermoplastique ou thermodurcissable, telles que des fibres de polyamides semi-aromatiques, des fibres d'aramide ou des fibres en polyoléfines par exemple. De préférence, elles sont à base de polymère thermoplastique amorphe et présentent une température de transition vitreuse Tg supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Avantageusement, elles sont à base de polymère thermoplastique semi-cristallin et présentent une température de fusion Tf supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Ainsi, il n'y a aucun risque de fusion pour les fibres organiques de constitution du matériau fibreux lors de l'imprégnation par la matrice thermoplastique du composite final. Parmi les fibres d'origine végétale, on peut citer les fibres naturelles à base de lin, de chanvre, de lignine, de bambou, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice de polymère thermoplastique.

Il peut également correspondre à des fibres avec des fils de maintien.

Ces fibres de constitution peuvent être utilisées seules ou en mélanges. Ainsi, des fibres organiques peuvent être mélangées aux fibres minérales pour être pré-imprégnée de polymère thermoplastique et former le matériau fibreux pré-imprégné.

Les mèches de fibres organiques peuvent avoir plusieurs grammages. Elles peuvent en outre présenter plusieurs géométries.

De préférence le matériau fibreux est constitué par des fibres continues de carbone, de verre ou de carbure de silicium ou leur mélange, en particulier des fibres de carbone. Il est utilisé sous forme d'une mèche ou de plusieurs mèches qui constituent alors une monomèche présentant l'addition des fibres de chaque mèche.

Dans les matériaux imprégnés aussi appelés « prêts à l'emploi », le polymère ou mélange de polymères thermoplastiques d'imprégnation est réparti uniformément et de manière homogène autour des fibres. Dans ce type de matériau, le polymère thermoplastique d'imprégnation doit être réparti de manière la plus homogène possible au sein des fibres afin d'obtenir un minimum de porosités, c'est à dire un minimum de vides entre les fibres. En effet, la présence de porosités dans ce type de matériaux peut agir comme des points de concentrations de contraintes, lors d'une mise sous contrainte mécanique de traction par exemple, et qui forment alors des points d'initiation de rupture du matériau fibreux imprégné et le fragilisent mécaniquement. Une répartition homogène du polymère ou mélange de polymères améliore donc la tenue mécanique et l'homogénéité du matériau composite formé à partir de ces matériaux fibreux imprégnés.

Ainsi, dans le cas de matériaux imprégnés dits « prêts à l'emploi », le taux de fibres dans ledit matériau fibreux pré-imprégné est compris de 45 à 65 % en volume, de préférence de 50 à 60% en volume, notamment de 54 à 60% en volume.

La mesure du taux d'imprégnation peut être réalisée par analyse d'image (utilisation de microscope ou d'appareil photo ou de caméra numérique, notamment), d'une coupe transversale du ruban, en divisant la surface du ruban imprégné par le polymère par la surface totale du produit (surface imprégnée plus surface des porosités). Afin d'obtenir une image de bonne qualité il est préférable d'enrober le ruban découpé dans son sens transversal dans une résine de polissage standard et de polir avec un protocole standard permettant l'observation de l'échantillon au microscope grossissement fois 6 au minimum. Avantageusement, le taux de porosité dudit matériau fibreux imprégné est inférieur à 10%, notamment inférieur à 5%, en particulier inférieur à 2%.

Il faut noter qu'un taux de porosité nul est difficilement accessible et que par conséquent, avantageusement le taux de porosité est supérieur à 0% mais inférieur aux taux cités ci-dessus.

Le taux de porosité correspond au taux de porosité fermée et peut être déterminée soit par microscopie électronique, soit comme étant l'écart relatif entre la densité théorique et la densité expérimentale dudit matériau fibreux imprégné tel que décrit dans la partie exemples de la présente invention.

Selon un autre aspect, la présente invention concerne un procédé de préparation d'un matériau fibreux imprégné tel que défini ci-dessus, caractérisé en ce qu'il comprend une étape de chauffage du matériau fibreux pré-imprégné et de finalisation de l'imprégnation au moyen d'au moins un système de chauffage muni d'au moins une pièce d'embarrage (E) et optionnellement une étape de mise en forme et de calibration de la mèche ou desdites mèches parallèles d'un matériau fibreux imprégné.

Avantageusement, l'étape de mise en forme et de calibration est précédée de ladite étape de chauffage du matériau fibreux pré-imprégné et de finalisation de l'imprégnation.

Dans un mode de réalisation, l'étape de chauffage d'un matériau fibreux pré-imprégné et de finalisation de l'imprégnation est effectuée avec le même système de chauffage.

Dans un autre mode de réalisation, l'étape de chauffage d'un matériau fibreux pré-imprégné et de finalisation de l'imprégnation est effectuée avec deux systèmes de chauffage séparés. Avantageusement, l'étape de chauffage d'un matériau fibreux pré-imprégné et de finalisation de l'imprégnation est précédée d'une étape de pré-imprégnation du matériau fibreux.

Avantageusement, le procédé de l'invention comprend les étapes suivantes :

i) Pré-imprégnation d'un matériau fibreux notamment par dépôt de poudre, par voie fondue, notamment par pultrusion, par extrusion en tête d'équerre de polymère fondu, par passage en continu des fibres dans une dispersion aqueuse de poudre polymère ou dispersion aqueuse de particules de polymère ou émulsion ou suspension aqueuse de polymère, par lit fluidisé, équipé ou non d'au moins un embarrage (E'), par projection par buse ou pistolet par voie sèche dans une cuve, équipée ou non d'au moins un embarrage (E') pour obtenir un matériau fibreux pré-imprégné,

ii) étape de chauffage dudit matériau fibreux pré-imprégné et de finalisation de l'imprégnation pour obtenir un matériau fibreux imprégné constitué d'un ruban sous forme de feuillard présentant une épaisseur moyenne inférieure ou égale à 100$\mu$m, en particulier comprise de 10$\mu$m à 100$\mu$m,

iii) optionnellement étape de mise en forme et de calibration de la mèche ou desdites mèches parallèles dudit matériau fibreux imprégné pour obtenir un matériau fibreux imprégné constitué d'un ruban sous forme de tape mince calibrée présentant une épaisseur moyenne inférieure ou égale à 100$\mu$m, en particulier comprise de 10$\mu$m à 100$\mu$m.

Avantageusement, le procédé de l'invention est effectué à une vitesse d'au moins 10 m/min, en particulier d'au moins 20 m/min, notamment d'au moins 30 m/min.

## Procédé de préparation du matériau fibreux imprégné sous forme de feuillard ou de tape mince

Le matériau fibreux imprégné sous forme de feuillard, monocouche, peut être préparé en deux étapes :

Une première étape de pré-imprégnation par une matrice polymère et une seconde étape de chauffage pour finaliser l'imprégnation au moyen d'au moins une pièce d'embarrage (E) et d'au moins un système de chauffage.

Le matériau fibreux imprégné sous forme de tape mince, monocouche, peut être préparé en trois étapes :

Une première étape de pré-imprégnation par une matrice polymère, une seconde étape de chauffage pour finaliser l'imprégnation au moyen d'au moins une pièce d'embarrage (E) et d'au moins un système de chauffage et une troisième étape de mise en forme et calibration.

## Première étape : pré-imprégnation

La première étape de pré-imprégnation pour obtenir un matériau fibreux pré-imprégné peut être effectuée selon les techniques bien connues de l'homme du métier et notamment choisies parmi celles décrites ci-dessus.

Ainsi elle peut être effectuée par une technologie de pré-imprégnation par dépôt de poudre, par voie fondue, notamment par pultrusion, par extrusion en tête d'équerre de polymère fondu, par passage en continu des fibres dans une dispersion aqueuse de poudre polymère ou dispersion aqueuse de particules de polymère ou émulsion ou suspension aqueuse de polymère, par lit fluidisé, équipé ou non d'au moins un embarrage (E'), par projection par buse ou pistolet par voie sèche dans une cuve, équipée ou non d'au moins un embarrage (E').

L'embarrage peut être un rouleau de compression concave, convexe ou cylindrique, en particulier il est cylindrique.

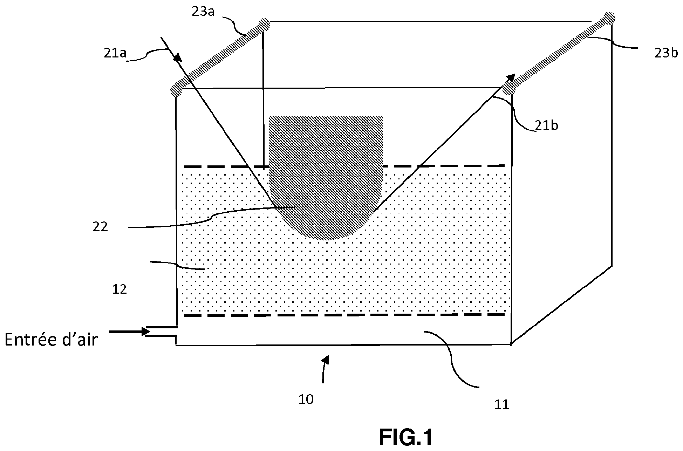

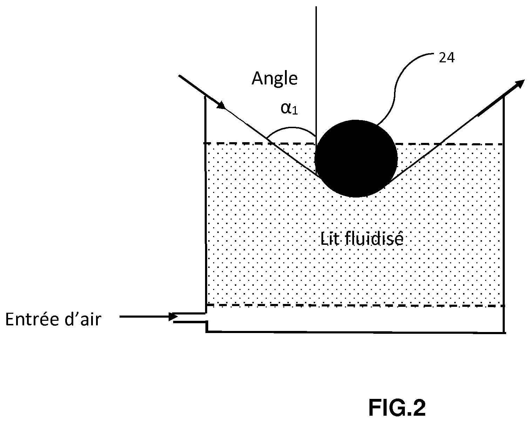

La figure 1 présente un exemple de cuve muni d'un embarrage et la figure 2 présente un exemple de cuve comprenant un lit fluidisé dans laquelle l'embarrage est un rouleau de compression cylindrique.

La même cuve peut être utilisée sans présence de lit fluidisé et équipée de pistolet de projection.

La pré-imprégnation peut aussi être effectuée avec un système tel que défini ci-dessus dans lequel un ou plusieurs embarrage(s) (E") est(sont) présent(s) en amont dudit système, notamment avant la cuve dans laquelle la pré-imprégnation est effectuée.

Il faut noter que les pièces d'embarrage (E) et (E") peuvent être identiques ou différentes que ce soit au niveau du matériau ou de la forme et ses caractéristiques (diamètre, longueur, largeur, hauteur ... en fonction de la forme).

Voie **fondue** :

L'étape de pré-imprégnation peut être effectuée par voie fondue, notamment par pultrusion. Les technique de pré-imprégnation par voie fondue sont bien connues de l'homme du métier et sont décrites dans les références ci-dessus.

L'étape de pré-imprégnation est effectué notamment par extrusion en tête d'équerre de la matrice polymère et passage de ladite mèche ou desdites mèches dans cette tête d'équerre puis passage dans une filière chauffée, le la tête d'équerre étant éventuellement munie d'embarrages fixes ou rotatifs sur lesquels la mèche défile provoquant ainsi un épanouissement de ladite mèche permettant une pré-imprégnation de ladite mèche.

La pré-imprégnation peut notamment être effectuée telle que décrite dans US 2014/0005331A1 à la différence que l'alimentation en résine est effectuée des deux côtés de ladite mèche et qu'il n'existe pas de surface de contact éliminant une partie de la résine sur l'une des deux surfaces.

Avantageusement, l'étape de pré-imprégnation est effectuée par voie fondue à grande vitesse, c'est-à-dire avec une vitesse de défilement de ladite mèche ou desdites mèches d'au moins 10 m/min, en particulier d'au moins 20 m/min, notamment d'au moins 30 m/min.

**Lit fluidisé** :

L'étape de pré-imprégnation peut être effectuée en lit fluidisé.

Un exemple d'unité de mise en œuvre d'un procédé de fabrication sans l'étape de chauffage au moyen d'au moins une pièce d'embarrage est décrit dans la demande internationale WO 2015/121583.

Ce système décrit l'utilisation d'une cuve comprenant un lit fluidisé pour effectuer l'étape de pré-imprégnation et peut être utilisé dans le cadre de l'invention.

Avantageusement, la cuve comprenant le lit fluidisé est muni d'au moins une pièce d'embarrage (E') (figure 1) qui peut être un rouleau de compression (figure 2)).

Par pièce d'embarrage (E'), il faut entendre tout système sur lequel la mèche à la possibilité de défiler dans la cuve. La pièce d'embarrage (E') peut avoir n'importe quelle forme à partir du moment où la mèche peut défiler dessus.

Un exemple de pièce d'embarrage (E'), sans restreindre l'invention à celui-ci, est détaillé dans la figure 1.

Il faut noter que les pièces d'embarrage (E) et (E') peuvent être identiques ou différentes que ce soit au niveau du matériau ou de la forme et ses caractéristiques (diamètre, longueur, largeur, hauteur ... en fonction de la forme).

Cependant, la pièce d'embarrage (E') n'est ni chauffante ni chauffée.

L'étape de pré-imprégnation du matériau fibreux est réalisée par passage d'une ou plusieurs mèches dans un dispositif de pré-imprégnation en continu, comprenant une cuve (10) muni d'au moins une pièce d'embarrage (E') et comprenant un lit fluidisé (12) de poudre de ladite matrice polymère.

La poudre de ladite matrice polymère ou polymère est mise en suspension dans un gaz G (de l'air par exemple) introduit dans la cuve et circulant dans la cuve (10) à travers une trémie (11). La ou les mèches sont mises en circulation dans ce lit fluidisé (12).

La cuve peut avoir toute forme, notamment cylindrique ou parallélépipédique, en particulier un parallélépipède rectangle ou un cube, avantageusement un parallélépipède rectangle. La cuve (10) peut être une cuve ouverte ou fermée.

Dans le cas où la cuve est fermée, elle est alors équipée d'un système d'étanchéité pour que la poudre de ladite matrice polymère ne puisse pas sortir de ladite cuve.

Cette étape de pré-imprégnation est donc effectuée par voie sèche, c'est à dire que la matrice polymère thermoplastique est sous forme de poudre, notamment en suspension dans un gaz, en particulier de l'air, mais ne peut pas être en dispersion dans un solvant ou dans l'eau. Chaque mèche à pré-imprégner est déroulée d'un dispositif à dévidoirs sous la traction engendrée par des cylindres (non représentés).

Chaque dévidoir est pourvu d'un frein (non représenté) de manière à appliquer une tension sur chaque mèche de fibres. Dans ce cas, un module d'alignement permet de disposer les mèches de fibres parallèlement les unes par rapport aux autres. De cette manière les mèches de fibres ne peuvent pas être en contact les unes avec les autres, ce qui permet d'éviter une dégradation mécanique des fibres par frottement entre elles.

La mèche de fibres ou les mèches de fibres parallèles passent alors dans une cuve (10), comprenant en particulier un lit fluidisé (12), munie d'une pièce d'embarrage (E') qui est un rouleau de compression (24) dans le cas de la figure 2. La mèche de fibres ou les mèches de fibres parallèles ressort(ent) ensuite de la cuve après pré-imprégnation après contrôle éventuel du temps de séjour dans la poudre.

L'expression « temps de séjour dans la poudre» signifie le temps durant lequel la mèche est en contact avec ladite poudre dans le lit fluidisé.

Si le matériau fibreux, tel que les mèches de fibre de verre ou de carbone, présente un ensimage, une étape optionnelle de dé-ensimage peut être effectuée avant le passage du matériau fibreux dans la cuve.

Avantageusement, la cuve utilisée comprend un lit fluidisé avec un embarrage et ladite étape de pré-imprégnation est effectuée avec un épanouissement simultané de ladite mèche ou desdites mèches entre l'entrée et la sortie de la cuve comprenant ledit lit fluidisé.

L'expression « entrée de la cuve » correspond à la tangente verticale du bord de la cuve qui comprend le lit fluidisé.

L'expression « sortie de la cuve » correspond à la tangente verticale de l'autre bord de la cuve qui comprend le lit fluidisé.

L'épanouissement consiste à singulariser au maximum chaque fibre constitutive de ladite mèche des autres fibres qui l'entourent dans son plus proche espace. Il correspond à l'étalement transverse de la mèche.

En d'autres termes, l'étalement transverse ou la largeur de la mèche augmente entre l'entrée de la cuve comprenant le lit fluidisé et la sortie de la cuve comprenant le lit fluidisé et permet ainsi une pré-imprégnation améliorée du matériau fibreux.

L'utilisation d'au moins un embarrage (E'), en particulier un rouleau de compression cylindrique, dans l'étape de pré-imprégnation permet donc une pré-imprégnation améliorée par rapport aux procédés de l'art antérieur.

L'expression « rouleau de compression » signifie que la mèche qui défile s'appuie partiellement ou totalement sur la surface dudit rouleau de compression, ce qui induit l'épanouissement de la dite mèche.

Avantageusement, ledit au moins un rouleau de compression est de forme cylindrique et le pourcentage d'épanouissement de ladite mèche ou desdites mèches entre l'entrée et la sortie de la cuve dudit lit fluidisé est compris de 1% à 1000%, préférentiellement de 100% à 800% préférentiellement de 200% à 800%, préférentiellement de 400% à 800%.

Le pourcentage d'épanouissement est égal au rapport de la largeur finale de la mèche sur la largeur initiale de la mèche multiplié par 100.

Le diamètre dudit au moins un rouleau de compression est compris de 3 mm à 500 mm, préférentiellement de 10 mm à 100 mm, en particulier de 20 mm à 60 mm.

Au-dessous de 3 mm, la déformation de la fibre induite par le rouleau de compression est trop importante.

Avantageusement, le rouleau de compression est cylindrique et non cannelé et en particulier est métallique.

Lorsque la pièce d'embarrage (E') est au moins un rouleau de compression, selon une première variante, un seul rouleau de compression est présent dans le lit fluidisé et ladite pré-imprégnation est effectuée au niveau de l'angle $\alpha_1$ formé par ladite mèche ou lesdites mèches entre l'entrée dudit rouleau de compression et la tangente verticale audit rouleau de compression.

L'angle $\alpha_1$ formé par ladite mèche ou lesdites mèches entre l'entrée dudit rouleau de compression et la tangente verticale audit rouleau de compression permet la formation d'une zone dans laquelle la poudre va se concentrer conduisant ainsi à un « effet de coin » qui avec l'épanouissement simultané de la mèche par ledit rouleau de compression permet une pré-imprégnation sur une largeur plus importante de mèche et donc une pré-imprégnation améliorée comparée aux techniques de l'art antérieur améliorée.

Dans toute la description, toutes les valeurs d'angle données sont exprimées en valeurs absolue.

Avantageusement, l'angle $\alpha_1$ est compris de 0 à 89°, préférentiellement 5° à 85°, préférentiellement de 5° à 45°, préférentiellement de 5° à 30°.

Néanmoins, un angle $\alpha_1$ compris de 0 à 5° est susceptible d'engendrer des risques de sollicitation mécanique, ce qui conduira à la casse des fibres et un angle $\alpha_1$ compris de 85° à 89° ne crée pas suffisamment d'effort mécanique pour créer « l'effet de coin ».

Une valeur de l'angle $\alpha_1$ égale à 0° correspond donc à une fibre verticale. Il est bien évident que la hauteur du rouleau de compression cylindrique est réglable permettant ainsi de pouvoir positionner la fibre verticalement.

Avantageusement, le bord d'entrée de la cuve (23a) est équipé d'un rouleau, notamment cylindrique et rotatif sur lequel défile ladite mèche ou les dites mèches conduisant ainsi à un épanouissement préalable à la pré-imprégnation.

Il est bien évident que « l'effet de coin » provoqué par l'angle $\alpha_1$ favorise la pré-imprégnation sur une face mais l'épanouissement de ladite mèche obtenu grâce au rouleau de compression permet aussi d'avoir une pré-imprégnation sur l'autre face de ladite mèche. Autrement dit, ladite pré-imprégnation est favorisée sur une face de ladite mèche ou desdites mèches au niveau de l'angle $\alpha_1$ formé par ladite mèche ou lesdites mèches entre l'entrée dudit au moins un rouleau de compression $R_1$ et la tangente verticale au rouleau de compression $R_1$ mais l'épanouissement permet aussi de pré-imprégner l'autre face.

L'angle $\alpha_1$ est tel que défini ci-dessus.

Avantageusement, le diamètre en volume D90 des particules de poudre de polymère thermoplastique est compris 30 à 500 $\mu$m, avantageusement de 80 à 300 $\mu$m. Avantageusement, le diamètre en volume D10 des particules de poudre de polymère thermoplastique est compris de 5 à 200 $\mu$m, avantageusement de 15 à 100 $\mu$m. Avantageusement, le diamètre en volume des particules de poudre de polymère thermoplastique est compris dans le ratio D90/D10, soit compris de 1,5 à 50, avantageusement de 2 à 10.

Avantageusement, le diamètre moyen D50 en volume des particules de poudre de polymère thermoplastique est compris de 10 à 300 μm, notamment de 30 à 200 μm, plus particulièrement de 45 à 200μm.

Les diamètres en volume des particules (D10, D50 et D90) sont définis selon la norme ISO 9276 :2014.

Le « D50 » correspond au diamètre moyen en volume, c'est à dire la valeur de la taille de particule qui divise la population de particules examinée exactement en deux.

Le « D90 » correspond à la valeur à 90% de la courbe cumulée de la distribution granulométrique en volume.

Le « D10 » correspond à la correspond à la taille de 10% du volume des particules.

Selon d'autres variantes, deux, trois rouleaux ou plus peuvent être présents dans le lit fluidisé.

**Pulvérisation par pistolet** :

L'étape de pré-imprégnation du matériau fibreux peut également être effectuée par passage d'une ou plusieurs mèches dans un dispositif de pré-imprégnation en continu par projection,

comprenant une cuve, comprenant une ou des buses(s) ou un ou des pistolet(s) projetant la poudre de polymère sur le matériau fibreux en entrée de rouleau.

La poudre de polymère(s) ou polymère est projetée dans la cuve au moyen de buse(s) ou de pistolet(s) au niveau de la pièce d'embarrage notamment du rouleau de compression (en entrée) sur ledit matériau fibreux. La ou les mèches sont mises en circulation dans cette cuve.

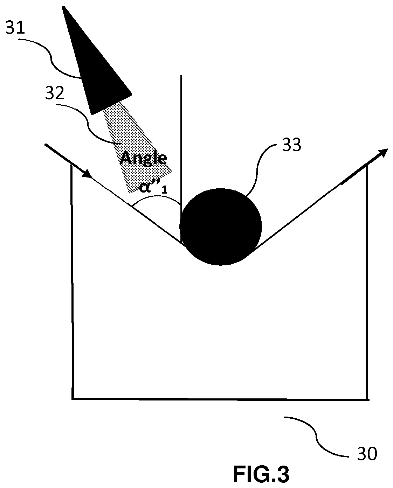

Un exemple sans être limité à celui-ci avec un pistolet est présenté figure 3.

Toutes les caractéristiques des embarrages, et notamment des rouleaux de compression, de l'épanouissement, et de l'angle $\alpha_1$ provoquant l'effet de coin et détaillées pour le lit fluidisé sont également valables pour la pulvérisation par pistolet.

Selon d'autres variantes, deux, trois rouleaux ou plus peuvent être présents munis chacun d'un pistolet.

Dans un mode de réalisation, la pré-imprégnation est effectuée par dépôt de poudre, par passage en continu des fibres dans une dispersion aqueuse de poudre polymère ou dispersion aqueuse de particules de polymère ou émulsion ou suspension aqueuse de polymère, par lit fluidisé, équipé ou non d'au moins un embarrage (E'), par projection par buse ou pistolet par voie sèche dans une cuve, équipée ou non d'au moins un embarrage (E').

Dans un autre mode de réalisation, la pré-imprégnation est effectuée par passage en continu des fibres dans une dispersion aqueuse de poudre polymère ou dispersion aqueuse de particules de polymère ou émulsion ou suspension aqueuse de polymère, par lit fluidisé, équipé ou non d'au moins un embarrage (E'), par projection par buse ou pistolet par voie sèche dans une cuve, équipée ou non d'au moins un embarrage (E').

**Deuxième étape : chauffage du matériau fibreux pré-imprégné et finalisation de l'imprégnation.**

L'étape de pré-imprégnation peut donc être effectuée par tout moyen muni ou non d'au moins un embarrage (E').

La présence de l'embarrage permet l'épanouissement de la mèche et favorise la préimprégnation. Cependant, la présence de cet embarrage n'est pas indispensable à partir du moment où un système de chauffage muni d'au moins une pièce d'embarrage (E) est présent après l'étape de pré-imprégnation pour finaliser l'imprégnation.

L'expression « pièce d'embarrage (E)» signifie tout système sur lequel la mèche a la possibilité de défiler. La pièce d'embarrage (E) peut avoir n'importe quelle forme à partir du moment où la mèche peut défiler dessus. Elle peut être fixe ou en rotation. Avantageusement, la calandre chauffante est exclue de la définition de la pièce d'embarrage (E).

Le système de chauffage est tout système dégageant de la chaleur ou émettant un rayonnement susceptible de chauffer la pièce d'embarrage (E).

Il peut être choisi parmi une lampe infrarouge, une lampe UV, un chauffage par convection, un chauffage micro-onde un chauffage laser, et un chauffage Hautes Fréquences (HF).

La pièce d'embarrage (E) est par conséquent conductrice ou absorbe le rayonnement émis par la chaleur.

L'expression « pièce d'embarrage (E) conductrice de la chaleur » signifie que la pièce d'embarrage (E) est constituée d'un matériau capable d'absorber et de conduire la chaleur. Il peut être également un système de chauffage par ondes hautes fréquences, micro-ondes ou laser.

Dans ce cas, la pièce d'embarrage est non conductrice de la chaleur ou n'absorbe pas le rayonnement émis par la chaleur.

L'expression « pièce d'embarrage (E) non conductrice de la chaleur » signifie que la pièce d'embarrage (E) est constituée d'un matériau incapable d'absorber et de conduire la chaleur. Ladite au moins une pièce d'embarrage (E) est situé ou comprise dans l'environnement du système de chauffage, c'est-à-dire qu'elle n'est pas à l'extérieur du système de chauffage. Avantageusement ledit système de chauffage surmonte ladite au moins une pièce d'embarrage (E). Le système de chauffage est à une hauteur suffisante pour que le polymère présent sur la mèche puisse fondre mais sans dégrader ledit polymère.

Néanmoins, ledit système de chauffage comprend soit uniquement ladite au moins une pièce d'embarrage (E) mais peut comprendre également une portion de la mèche, hors dudit système d'embarrage (E), ladite portion de mèche étant située avant et/ou après ledit système d'embarrage (E).

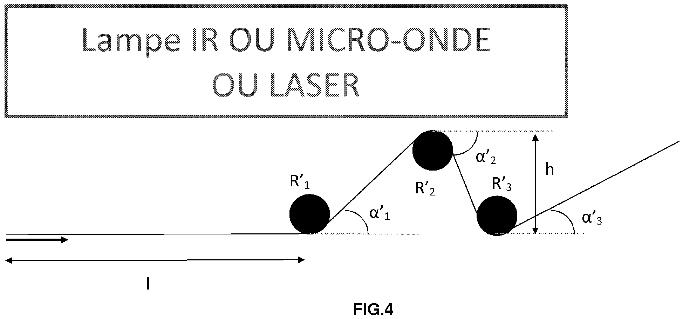

Une représentation d'un système de chauffage et de trois embarrages (E), correspondant à $R'_1$, $R'_2$ et $R'_3$, est présentée figure 4, sans être limitée en quoi que ce soit à celle-ci.

Il est bien évident qu'un second système de chauffage peut être présent sous les embarrages permettant ainsi une fusion uniforme dudit polymère sur les deux surfaces de la mèche.

Le système de chauffage représenté figure 4 est un système horizontal. Cependant, le ou les système(s) de chauffage peuvent être disposés verticalement avec défilement également vertical de la mèche au travers des embarrages.

Par conséquent, cette étape de chauffage permet de parfaire l'imprégnation de la mèche effectuée au préalable lors de l'étape de pré-imprégnation et notamment d'obtenir une imprégnation homogène et à cœur.

En effet, quel que soit le système utilisé pour l'étape de pré-imprégnation, un premier épanouissement se produit lors de cette étape, notamment si l'étape de pré-imprégnation est effectuée avec utilisation de pièces d'embarrage (E'), telle que dans un lit fluidisé avec au moins un embarrage comme décrit ci-dessus.

Un premier épanouissement de la mèche se produit au niveau desdits rouleaux de compression correspondants aux pièces d'embarrage (E') avec « effet de coin » en raison du défilement partiel ou total de ladite mèche sur la ou lesdites pièce(s) d'embarrage (E') et un deuxième épanouissement se produit lors de l'étape de chauffage, au niveau desdits rouleaux de compression correspondants aux pièces d'embarrage (E) en raison du défilement partiel ou total de ladite mèche sur la ou lesdites pièce(s) d'embarrage (E).

Le système de chauffage peut être séparé en deux et donc constitué de deux systèmes de chauffage, un premier système de chauffage avant lesdites pièces d'embarrage (E) et un deuxième système de chauffage comprenant les dites pièces d'embarrage. Il est bien évident que la distance entre les deux systèmes de chauffage est alors suffisante pour que le polymère reste à l'état de fusion.

Les deux systèmes de chauffage peuvent être de même nature ou de nature différente et de puissance identique ou différente.

Ce deuxième épanouissement est précédé lors du passage de la mèche dans le système de chauffage, avant son défilement partiel ou total sur la ou lesdites pièce(s) d'embarrage (E), d'une rétractation de la mèche en raison de la fusion du polymère sur ladite mèche.

Ce deuxième épanouissement combiné à la fusion de ladite matrice polymère par le système de chauffage et à la rétractation de la mèche permettent d'homogénéiser la pré-imprégnation et finaliser ainsi l'imprégnation et d'avoir ainsi une imprégnation à cœur et d'avoir un taux élevé de fibres en volume, notamment constant dans au moins 70% du volume du ruban, notamment dans au moins 80% du volume du ruban, en particulier dans au moins 90% du volume du ruban, plus particulièrement dans au moins 95% du volume du ruban, ainsi que de diminuer la porosité.

Une mèche de largeur $l_1$ avant pré-imprégnation présente donc une largeur $l_2 > l_1$ après préimprégnation et une largeur $l_3 < l_2 > l_1$ après fusion du polymère et rétractation dudit matériau fibreux pré-imprégné par ledit polymère en fusion.

Après passage sur la ou les pièce(s) d'embarrages, le deuxième épanouissement du matériau fibreux comprenant ledit polymère en fusion conduit à un matériau présentant une largeur moyenne $l_4$ environ égale à $l_2$ et présentant une épaisseur moyenne $e_4$ inférieure ou égale à $100\mu m$.

Le matériau fibreux imprégné constitue alors un ruban sous forme de feuillard de largeur moyenne non calibrée mais d'épaisseur moyenne inférieure ou égale à $100\mu m$. Avantageusement, le pourcentage d'épanouissement lors de l'étape de chauffage entre l'entrée du premier rouleau de compression R', et la sortie du dernier rouleau de compression $R'_i$ est d'environ 0 à 300%, en particulier de 0 à 50%.

Les différents épanouissements lors de l'étape de chauffage combinés à la fusion du polymère thermoplastique et la rétractation de la mèche pendant ladite étape de chauffage permettent l'obtention d'un taux de fibres imprégnées après l'étape de chauffage compris de 45 à 65 % en volume, de préférence de 50 à 60% en volume, notamment de 54 à 60% (taux de fibres qui ne peut être atteint par les techniques classiques de voie fondue), le taux de fibres en volume et la répartition des fibres étant substantiellement identique en moyenne de part et d'autre du plan médian du matériau fibreux sur toute la longueur dudit matériau fibreux conduisant ainsi à l'obtention d'un matériau fibreux monocouche.

En dessous de 45% de fibres, le renfort n'a pas d'intérêt pour ce qui concerne les propriétés mécaniques.

Au-dessus de 65%, les limites du procédé sont atteintes et les propriétés mécaniques sont reperdues.

Il est bien évident que l'épaisseur moyenne $e_4$ est dépendante du taux de fibres imprégnées, l'épaisseur moyenne étant notamment inférieure ou égale à $100\mu m$ pour un taux de fibres imprégnées compris de 45% à 65% en volume.

Avantageusement, le taux de porosité dans ledit matériau fibreux imprégné est inférieur à 10%, notamment inférieur à 5%, en particulier inférieur à 2%.

**Etape de mise en forme et calibration: obtention de la tape mince**

Une étape de mise en forme de la mèche ou desdites mèches parallèles et de calibration dudit matériau fibreux imprégné est effectuée après sortie du deuxième système de chauffage.

Cette étape peut être effectuée directement après sortie du deuxième système de chauffage et dans ce cas la vitesse de défilement de la mèche est identique dans les deuxième et troisième systèmes de chauffage ou de manière différée, ce qui signifie que la vitesse de défilement de la mèche peut être différente entre le deuxième et le troisième système de chauffage.

Cette étape peut être effectuée selon l'un des modes de réalisation suivants :

1) passage d'un feuillard sur un ou plusieurs embarrages (tels que définis pour (E)) dont au moins un embarrage est cranté (gorgé), la largeur moyenne dudit feuillard étant inférieure à l'embarrage cranté (ou gorgé).

Au moins un desdits embarrages est situé sous un troisième système de chauffage, notamment IR, microonde ou hautes fréquences ou laser, en particulier IR de puissance (pour chaque ruban ou empilement de rubans parallèles) comprise entre 0,1W et 10kW, plus préférentiellement entre 0,1 et 6kW, plus préférentiellement entre 0,1 et 3kW, encore plus préférentiellement entre 0,6 et 3kW, encore plus préférentiellement entre 0,6 et 1,8kW. Avantageusement, ledit au moins un rouleau cranté (41) est situé en premier et est hors du troisième système de chauffage (45). Avantageusement, un deuxième embarrage cranté (44) est présent en sortie et hors du troisième système de chauffage.

Le passage sur les embarrages non crantés (42) et (43) permet de ré épanouir le feuillard à la largeur de l'embarrage cranté.

Le diamètre du ou des embarrage(s) cranté(s) (41) et (44) est compris de 12 mm à 50 mm, en particulier de 12 mm à 30 mm.

Le diamètre du ou des embarrage(s) non cranté (s) (42) et (43) est compris de 10 mm à 50 mm, en particulier de 10 mm à 30 mm.

Après passage sous le troisième système de chauffage, le feuillard mis en forme à la largeur de l'embarrage cranté en sortie du troisième système de chauffage passe au niveau de calandres chauffantes (46) montées en série équipées d'un IR de 1kW chacune et dont la puissance délivrée est modulable, hors du troisième système de chauffage, pour obtenir la tape mince d'épaisseur inférieure à 100$\mu$m. Dans le cas de la calibration à une largeur de 12.7mm, l'épaisseur théorique de la tape sera de 66$\mu$m pour une taux de fibre de 55% en volume et de 61$\mu$m pour un taux de fibre de 60% en volume.

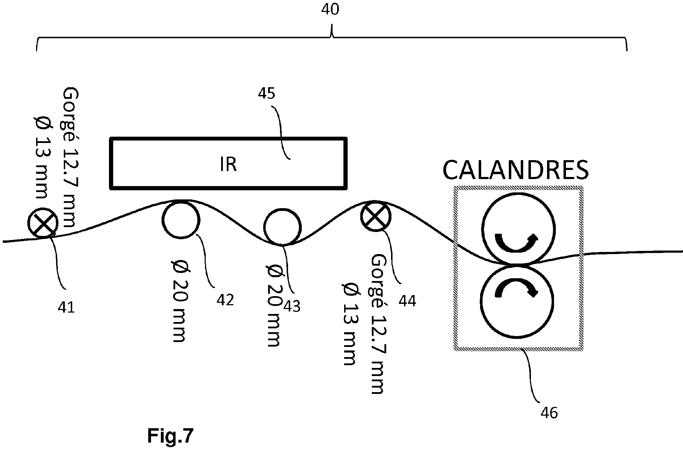

La figure 7 décrit un exemple de réalisation sans être limité à celui-ci.

Les embarrages sont présentés en figure 7 au même niveau mais ils peuvent être comme dans le deuxième système de chauffage à des hauteurs différentes. Les embarrages crantés peuvent également être de diamètre identique ou différent tout comme les embarrages non crantés.

2) passage d'un feuillard , sur un ou plusieurs embarrages (tels que définis pour (E)) dont au moins un embarrage est cranté (gorgé), la largeur moyenne dudit feuillard étant supérieure à l'embarrage cranté (ou gorgé).

Lesdits embarrages sont situés sous un troisième système de chauffage, notamment IR, microonde hautes fréquences ou laser, en particulier IR de puissance (pour chaque ruban ou empilement de rubans parallèles) comprise entre 0,1W et 10kW, plus préférentiellement entre 0,1 et 6kW, plus préférentiellement entre 0,1 et 3kW, encore plus préférentiellement entre 0,6 et 3kW, encore plus préférentiellement entre 0,6 et 1,8kW.

Avantageusement, ledit au moins un rouleau cranté est situé en premier.

Le passage sur le premier embarrage cranté permet de réduire la largeur du feuillard en dessous de la largeur de la gorge crantée. Avantageusement, un deuxième embarrage cranté est présent en sortie et hors du troisième système de chauffage avec une gorge de largeur supérieure à la largeur du feuillard.

Après passage sous le troisième système de chauffage, le feuillard mis en forme à la largeur de l'embarrage cranté en sortie et hors du troisième système de chauffage passe au niveau de calandres chauffantes montées en série équipées d'un IR de 1kW, hors du troisième système de chauffage, pour obtenir la tape mince d'épaisseur inférieure à 100$\mu$m.

Dans le cas de la calibration à une largeur de 12.7mm, l'épaisseur théorique de la tape sera de 66$\mu$m pour un taux de fibre de 55% en volume et de 61$\mu$m pour un taux de fibre de 60% en volume.

Un système de calandrage avec gestion de la pression et de l'écartement entre rouleaux tel que décrit dans WO 2015/121583 peut être utilisé dans ces deux modes de réalisation. L'embarrage est en particulier un rouleau cranté fixe ou rotatif, voire contre rotatif, en particulier fixe pour rassembler le dit matériau fibreux imprégné à la bonne largeur.

Le rouleau cranté peut également avoir des bords arrondis au niveau des contacts latéraux avec l'embarrage pour éviter de détériorer les fibres en bord de tape mince.

L'expression « bords arrondis » signifie que le fond du cran est de forme concave ou convexe.

Le matériau fibreux imprégné après passage sur le système de calandre constitue alors un un ruban sous la forme d'une tape mince présentant une largeur moyenne finale inférieure à l$_4$.

Avantageusement, le premier mode de réalisation de l'étape de mise en forme et calibration est préféré.

Ladite tape mince présente une épaisseur moyenne inférieure ou égale à 100$\mu$m pour un taux de fibres imprégnées compris de 45% à 65% en volume.

Avantageusement, ladite tape mince présente une largeur moyenne finale inférieure à l$_4$ et une épais-

seur moyenne comprise de 10μm à 100μm pour un taux de fibres imprégnées compris de 45% à 65% en volume.

Cela permet donc de travailler avec des grandes vitesses de défilement et de diminuer ainsi les coûts de production.

Avantageusement, le procédé selon l'invention est effectué à une vitesse d'au moins 10 m/min, en particulier d'au moins 20 m/min, notamment d'au moins 30 m/min.

Selon un autre aspect, la présente invention concerne l'utilisation d'un matériau fibreux imprégné, tel que défini ci-dessus, pour la préparation de feuilles thermoformables.

Le thermoformage est effectué au-delà de la Tg pour un polymère thermoplastique amorphe ou entre la Tg et la Tf pour un polymère thermoplastique semi-cristallin mais il peut également être effectué au-delà de la Tf polymère thermoplastique pour un semi-cristallin.

Le matériau fibreux imprégné est prédécoupé en morceaux présentant une largeur égale à la largeur initiale du dit matériau fibreux et une longueur comprise de 5 à 50 mm, en particulier de 20 à 30 mm, lesdits morceaux étant associés au hasard ou orientés pour la préparation de la feuille thermoformable.

Le matériau fibreux peut être soit un feuillard soit une tape mince.

## Modes de réalisation avantageux du procédé de l'invention

Avantageusement, le matériau fibreux est choisi parmi les mèches de fibre de carbone en particulier supérieures ou égales à 12K, en particulier choisi parmi 12K, 24K, 48, 50K et 400K, notamment 12K, 24K, 48 et 50K, et des fibres de verre en particulier dont le grammage est supérieur ou égal à 1200 Tex, notamment supérieur ou égal à 2400 Tex, supérieur ou égal à 4800 Tex.

Avantageusement, le prépolymère thermoplastique utilisé pour imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T, un PEKK, un PEEK et un PEI ou un mélange de ceux-ci.

Avantageusement, le prépolymère thermoplastique utilisé pour imprégner la fibre de verre est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T, un PEKK, un PEEK et un PEI ou un mélange de ceux-ci.

Avantageusement, le matériau fibreux comprend des mèches de fibre de carbone supérieures ou égales à 12K, en particulier choisi parmi 12K, 24K, 48, 50K et 400K, notamment 12K, 24K, 48 et 50K, et le polymère thermoplastique utilisé pour pré-imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/BACT/10T, un PA 11/MXDT/10T, un PEKK, un PEEK et un PEI ou un mélange de ceux-ci.

Avantageusement, le matériau fibreux est constitué de mèches de fibre de carbone supérieures ou égales à 12K, en particulier choisi parmi 12K, 24K, 48, 50K et 400K, notamment 12K, 24K, 48 et 50K, et le polymère thermoplastique utilisé pour pré-imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T, un PEKK, un PEEK et un PEI ou un mélange de ceux-ci.

Avantageusement, le matériau fibreux comprend des mèches de fibre de verre dont le grammage est supérieur ou égal à 1200 Tex, notamment supérieur ou égal à 2400 Tex, supérieur ou égal à 4800 Tex et le polymère thermoplastique utilisé pour pré-imprégner la fibre de verre est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T, un PEKK, un PEEK et un PEI ou un mélange de ceux-ci.

Avantageusement, le matériau fibreux est constitué de mèches de fibre de verre dont le grammage est supérieur ou égal à 1200 Tex, notamment supérieur ou égal à 2400 Tex, supérieur ou égal à 4800 Tex et le polymère thermoplastique utilisé pour pré-imprégner la fibre de verre est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T, un PEKK, un PEEK et un PEI ou un mélange de ceux-ci.

Avantageusement, le matériau fibreux comprend des mèches de fibre de carbone supérieures ou égales à 12K, en particulier choisi parmi 12K, 24K, 48, 50K et 400K, notamment 12K, 24K, 48 et 50K, et le polymère thermoplastique utilisé pour pré-imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T, un PEKK et un PEI ou un mélange de ceux-ci et la Tg dudit polymère thermoplastique est ≥ 80°C, notamment ≥ 100°C, en particulier ≥ 120°C, notamment ≥ 140°C ou la Tf est ≥ 150°C.

Avantageusement, le matériau fibreux est constitué de mèches de fibre de carbone supérieures ou égales à 12K, en particulier choisi parmi 12K, 24K, 48, 50K et 400K, notamment 12K, 24K, 48 et 50K, et le polymère thermoplastique utilisé pour pré-imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T, un PEKK et un PEI ou un mélange de ceux-ci et la Tg dudit polymère thermoplastique est ≥ 80°C, notamment ≥ 100°C, en particulier ≥ 120°C, notamment ≥ 140°C ou la Tf est ≥ 150°C.

Avantageusement, le matériau fibreux comprend de mèches de fibre de verre dont le grammage est supérieur ou égal à 1200 Tex, notamment supérieur ou égal à 2400 Tex, supérieur ou égal à 4800 Tex et le polymère thermoplastique utilisé pour pré-imprégner la fibre de verre est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T, un PEKK, un PEEK et un PEI ou un mélange de ceux-ci et la Tg dudit polymère thermoplastique est ≥ 80°C, notamment ≥ 100°C, en particulier ≥ 120°C, notamment ≥ 140°C ou la Tf est ≥ 150°C. Avantageusement, le matériau fibreux est constitué de mèches de fibre de verre dont le grammage est supérieur ou égal à 1200 Tex, notamment supérieur ou égal à 2400 Tex, supérieur ou égal à 4800 Tex et le polymère thermoplastique utilisé pour pré-imprégner la fibre de verre est choisi parmi un polyamide, notamment un polyamide aliphatique tel que PA 11, PA 12, un PA 11/1010 et un PA 12/1010, un polyamide semi-aromatique, en particulier un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T, un PEKK et un PEI ou un mélange de ceux-ci et la Tg dudit polymère thermoplastique est ≥ 80°C, notamment ≥ 100°C, en particulier ≥ 120°C, notamment ≥ 140°C ou la Tf est ≥ 150°C.

La figure 1 détaille une cuve (10) comprenant un lit fluidisé (12) avec une pièce d'embarrage, réglable en hauteur (22). Le bord de l'entrée de la cuve est équipé d'un rouleau rotatif 23a sur lequel défile la mèche 21a et le bord de la sortie cuve est équipé d'un rouleau rotatif 23b sur lequel défile la mèche 21b.

La figure 2 présente décrit un mode de réalisation à un seul rouleau de compression, avec une cuve (10) comprenant un lit fluidisé (12) dans lequel un seul rouleau de compression cylindrique (24) est présent et montrant l'angle $\alpha_1$.

Les flèches au niveau de la fibre indiquent le sens de défilement de la fibre.

La figure 3 présente décrit un mode de réalisation à un seul rouleau de compression, avec une cuve (30) comprenant un pistolet de projection (31) de poudre (32) dans laquelle un seul rouleau de compression cylindrique (33) est présent et montrant l'angle $\alpha''_1$.

Les flèches au niveau de la fibre indiquent le sens de défilement de la fibre.

La figure 4 présente un schéma d'un système de chauffage unique pour chauffage du matériau fibreux pré-imprégné et finalisation de l'imprégnation avec trois rouleaux pour la finalisation de l'imprégnation.

La figure 5 présente une photo prise au microscope électronique à balayage d'une vue en coupe d'une mèche de fibre de carbone SGL 50K imprégnée par une poudre de polyamide PA BACT/10T de D50= 108 $\mu$m (D90 = 198 $\mu$m et D10 = 48,3 $\mu$m) selon l'exemple 1 et décrit dans WO 2015/121583 (avant calandrage).

Le procédé selon WO 2015/121583 conduit à un matériau fibreux qui est trop épais (181 $\mu$m) et manque d'homogénéité à plusieurs endroits de la mèche imprégnée ainsi qu'une porosité importante et une mauvaise répartition des fibres.

Le diamètre d'une fibre représente 7 $\mu$m.

La figure 6 présente une photo prise au microscope électronique à balayage d'une vue en coupe d'une mèche de fibre de carbone SGL, 50K imprégnée par une poudre de polyamide PA BACT/10T (41/59 molaire) de D50 = 108 $\mu$m (D90 = 198 $\mu$m et D10 = 48,3 $\mu$m) selon l'invention exemple 2 (avant calandrage).

Le diamètre d'une fibre représente 7 $\mu$m.

Le feuillard obtenu présente une épaisseur moyenne inférieure de 88 $\mu$m avec un taux de fibres en volume de 55%.

La figure 7 présente un mode de réalisation de l'étape de mise en forme et de calibration du feuillard (obtenu à la figure 6) à 12,7 mm pour obtenir la tape mince à 12,7 mm avec un premier embarrage cranté (diamètre 13 mm, gorge 12,7 mm) hors infra rouge (IR), deux embarrages non crantés (diamètre 20 mm) et un embarrage cranté (diamètre 13 mm, gorge 12,7 mm) placé après le dernier chauffage IR et des calandres chauffantes montées en série équipées d'un IR de 1kW chacune .

La figure 8 présente une photo prise en microscopie optique d'une vue en coupe d'une mèche de fibre de carbone T700 12k 31E imprégnée par une poudre de polyamide PA 11/BACT (33/67) de D50 = 114 $\mu$m (D90 = 199 $\mu$m et D10 = 56 $\mu$m) selon l'invention exemple 5 (avant calandrage).

Le diamètre d'une fibre représente 7 $\mu$m.

La figure 9 présente une photo prise en microscopie optique d'une vue en coupe d'une mèche de fibre de carbone T700 12k 31E imprégnée par une poudre de polyamide PA 6I/6T (45/55 molaire) de D50 = 136 $\mu$m (D90 = 225 $\mu$m et D10 = 75 $\mu$m) selon l'invention exemple 6 (avant calandrage).

Le diamètre d'une fibre représente 7 $\mu$m.

La figure 10 présente une photo prise en microscopie optique d'une vue en coupe d'une mèche de fibre de carbone T700 12k 31E imprégnée par une poudre de polyamide PA MPMDT/10T (41/59 molaire) de D50 = 157 $\mu$m (D90 = 301 $\mu$m et D10 = 58 $\mu$m) selon l'invention exemple 7 (avant calandrage).

Le diamètre d'une fibre représente 7 $\mu$m.

Les exemples suivants illustrent de façon non limitative la portée de l'invention.

### Exemple 1 (exemple comparatif):

Une mèche de fibre de carbone SGL, 50K, a été imprégnée avec du PA BACT/10T tel que décrit dans WO 2015/121583.

D50 = 108 $\mu$M, D90 = 198 $\mu$m et D10 = 48,3 $\mu$m

### Résultats :

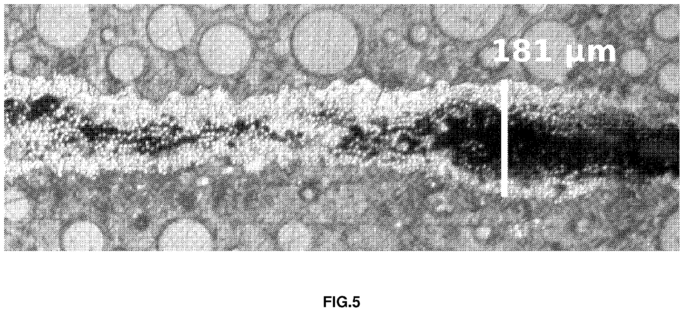

Les résultats sont présentés en figure 5 et montrent un manque d'homogénéité à plusieurs endroits de la mèche imprégnée ainsi qu'une porosité importante et une mauvaise répartition des fibres.

### Exemple 2 : Matériau fibreux (fibre de carbone SGL, 50K) monocouche imprégné par du BACT/10T (41/59 molaire)

Le mode opératoire suivant a été effectué: Quatre rouleaux cylindriques et fixes de diamètre 8 cm sont présents en amont de la cuve comprenant le lit fluidisé sur lesquels défile la mèche.

Les rouleaux sont distants de 54 cm (distance entre le l'axe central du premier rouleau et l'axe central du dernier rouleau)

### Etape de pré-imprégnation par lit fluidisé

- Un rouleau de compression cylindrique $R_1$ dans la cuve (L= 500 mm, l= 500mm, H= 600mm), diamètre 25 mm tel que représenté figure 2.
- Temps de séjour de 0,3 sec dans la poudre
- Angle $\alpha_1$ de 25°
- D50 =108 $\mu$m, (D10 = 48,3 $\mu$m, D90 = 198$\mu$m) pour la poudre de BACT/10T.
- bord de la cuve équipé d'un rouleau fixe.

**Etape de chauffage du matériau fibreux préimprégné et finalisation de l'imprégnation.**

Le système de chauffage utilisé est celui décrit dans la figure 4 mais avec huit rouleaux cylindriques $R'_1$ à $R'_8$ fixes de diamètre 8 mm.

La vitesse d'avancement de la mèche est de 10 m/min

L'infrarouge utilisé présente une puissance totale de 25 kW, la hauteur entre l'infrarouge et le rouleau supérieur est de 4 cm et la hauteur entre l'infrarouge et les rouleaux inférieurs est de 9 cm.

Les angles $\alpha'_1$ à $\alpha'_8$ sont identiques et de 25°.

La hauteur h est de 20 mm

La longueur l est de 1000 mm

Les huit rouleaux sont distants chacun de 43 mm.

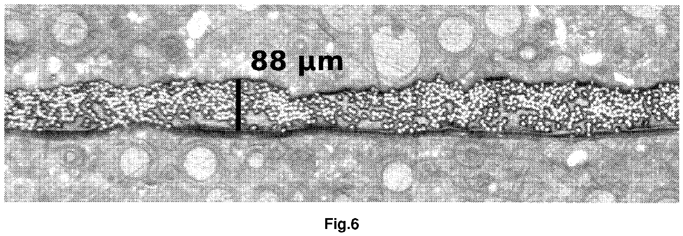

La figure 6 présente le matériau fibreux imprégné obtenu (feuillard) qui présente une épaisseur de 88 $\mu$m.

Le matériau fibreux obtenu est un matériau monocouche qui présente une homogénéité d'imprégnation et une faible porosité avec une très bonne répartition des fibres.

### Etape de mise en forme et de calibration pour obtenir la tape mince

Une étape de mise en forme de la mèche ou desdites mèches parallèles et de calibration dudit matériau fibreux imprégné est effectuée après sortie du deuxième système de chauffage tel que décrit par exemple en figure 4, par passage d'un feuillard de 88 $\mu$m (obtenu dans l'étape précédente) sur un premier embarrages cranté de diamètre 13 mm (la gorge mesurant 12,7 mm), puis passage sur deux rouleaux non crantés de diamètre 20 mm et pour finir sur un rouleau cranté de même diamètre que le premier et de même dimension de gorge, sous un troisième système de chauffage, notamment IR, microonde ou laser, en particulier IR de puissance (pour chaque ruban ou empilement de rubans parallèles) comprise entre 0,1W et 10kW, plus préférentiellement entre 0,1 et 6kW, plus préférentiellement entre 0,1 et 3kW, encore plus préférentiellement entre 0,6 et 3kW, encore plus préférentiellement entre 0,6 et 1,8kW.

Après passage sous le troisième système de chauffage, le feuillard mis en forme à 12,7 mm passe au niveau de calandres chauffantes montées en série équipées d'un IR de 1kW chacune, hors du troisième système de chauffage, pour obtenir la tape mince d'épaisseur inférieure à 100µm et calibrée à 12,7 mm. Le taux de fibre étant de 55% en volume et le taux de porosité étant < 2%, l'épaisseur de la tape mince est de 66µm.

La figure 7 décrit cet exemple de réalisation.

### Exemple 3 : Détermination du taux de porosité par analyse d'image

La porosité a été déterminée par analyse d'image sur une mèche de fibre de carbone SGL 50K imprégnée par du BACT/10T (41/59 molaire) en lit fluidisé suivie d'une étape de chauffage telle que définies ci-dessus.

Elle est de moins de 5%.

### Exemple 4 : Détermination du taux de porosité l'écart relatif entre densité théorique et densité expérimentale (méthode générale)

a) Les données requises sont :

- La densité de la matrice thermoplastique
- La densité des fibres
- Le grammage du renfort :

  • masse linéique (g/m) par exemple pour une tape ¼ de pouce (issu d'un seul rowing)
  • masse surfacique (g/m²) par exemple pour une tape plus large ou un tissu

b) Mesures à réaliser :

Le nombre d'échantillons doit être au minimum de 30 pour que le résultat soit représentatif du matériau étudié.
Les mesures à réaliser sont :

- La dimension des échantillons prélevés:

  ◦ Longueur (si masse linéique connue).
  ◦ Longueur et largeur (si masse surfacique connue).

- La densité expérimentale des échantillons prélevés :

  o Mesures de masse dans l'air et dans l'eau.

- La mesure du taux de fibres est déterminée selon ISO 1172 :1999 ou par analyse thermogravimétrique (ATG) telle que déterminé par exemple dans le document B. Benzler, Applikationslabor, Mettler Toledo, Giesen, UserCom 1/2001.

La mesure du taux de fibres de carbone peut être déterminée selon ISO 14127 :2008.

Détermination du taux de fibres massique théorique :

a) Détermination du taux de fibres massique théorique :

$$\%Mf_{th} = \frac{m_l.L}{Me_{air}}$$

Avec

$m_l$ la masse linéique de la tape,
$L$ la longueur de l'échantillon et
$Me_{air}$ la masse de l'échantillon mesuré dans l'air.

La variation du taux massique de fibres est supposée être directement liée à une variation du taux de matrice sans prendre en compte la variation de la quantité des fibres dans le renfort.

b) Détermination de la densité théorique :

$$d_{th} = \frac{1}{\frac{1 - \%Mf_{th}}{d_m} + \frac{\%Mf_{th}}{d_f}}$$

Avec $d_m$ et $d_f$ les densités respectives de la matrice et des fibres.
La densité théorique ainsi calculée est la densité accessible s'il n'y a aucune porosité dans les échantillons.

c) Evaluation de la porosité :
La porosité est alors l'écart relatif entre densité théorique et densité expérimentale.

### Exemple 5 : Matériau fibreux (fibre de carbone Toray T700 12k 31E) monocouche imprégné par du 11/BACT (33/67 molaire)

Le même mode opératoire que pour l'exemple 2 a été utilisé pour imprégner un matériau fibreux (fibre de carbone Toray T700 12k 31E de diamètre 7µm) par une poudre de 11/BACT de D50 =114 µm, (D10 = 56 µm, D90 = 199µm).

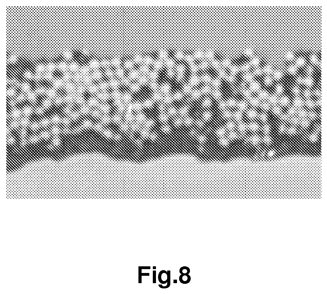

La figure 8 présente les résultats obtenus.

**Exemple 6 : Matériau fibreux (fibre de carbone Toray T700 12k 31E) monocouche imprégné par du PA 6I/ 6T (45/55 molaire)**

Le même mode opératoire que pour l'exemple 2 a été utilisé pour imprégner un matériau fibreux (fibre de carbone Toray T700 12k 31E de diamètre 7μm) par une poudre de PA 6I/6T de D50 = 136 μm (D90 = 225 μm et D10 = 75 μm).

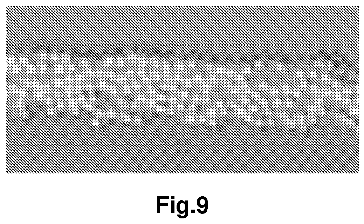

La figure 9 présente les résultats obtenus.

**Exemple 7 : Matériau fibreux (fibre de carbone Toray T700 12k 31E) monocouche imprégné par du MPMDT/10T (41/59 molaire)**

Le même mode opératoire que pour l'exemple 2 a été utilisé pour imprégner un matériau fibreux (fibre de carbone Toray T700 12k 31E de diamètre 7μm) par une poudre de PA MPMDT/10T de D50 = 157 μm (D90 = 301 μm et D10 = 58 μm).

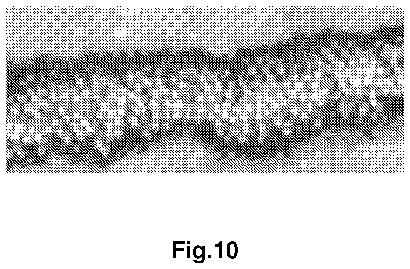

La figure 10 présente les résultats obtenus.

**Revendications**

1. Matériau fibreux imprégné comprenant au moins un matériau fibreux en fibres continues et :

   - au moins une matrice de polymère thermoplastique non réactif, ou
   - au moins un prépolymère thermoplastique réactif, précurseur dudit polymère thermoplastique non réactif, optionnellement mélangé à un allongeur de chaîne, **caractérisé en ce que** ledit au moins polymère thermoplastique non réactif ou le dit prépolymère réactif est un polymère ou prépolymère amorphe dont la température de transition vitreuse est telle que Tg ≥ 80°C, notamment Tg ≥ 100°C, en particulier ≥ 120°C, notamment ≥ 140°C, ou est un polymère ou prépolymère semi-cristallin dont la température de fusion Tf ≥ 150°C, où Tg et Tf sont mesurés comme indiqué dans la description, le taux de fibres dans ledit matériau fibreux pré-imprégné étant compris de 45 à 65 % en volume, de préférence de 50 à 60% en volume, notamment de 54 à 60%, l'épaisseur moyenne dudit matériau fibreux imprégné étant inférieure ou égale à 100μm, indépendamment du nombre de fibres présentes dans ledit matériau fibreux avant imprégnation, ledit matériau fibreux étant monocouche.

2. Matériau fibreux imprégné selon la revendication 1, **caractérisé en ce que** son épaisseur moyenne est comprise de 10μm à 100μm.

3. Matériau fibreux imprégné selon la revendication 1 ou 2, **caractérisé en ce que** le nombre de fibres dans ledit matériau fibreux pour des fibres de carbone est supérieur ou égal à 12K, en particulier choisi parmi 12K, 24K, 48, 50K et 400K, notamment 12K, 24K, 48 et 50K ou le grammage pour la fibre de verre est supérieur ou égal à 1200 Tex, notamment supérieur ou égal à 2400 Tex, supérieur ou égal à 4800 Tex.

4. Matériau fibreux imprégné selon l'une des revendications 1 à 3, **caractérisé en ce que** les fibres du matériau fibreux sont non ensimées.

5. Matériau fibreux imprégné selon l'une des revendications 1 à 4, **caractérisé en ce que** le taux de porosité dans ledit matériau fibreux imprégné est inférieur à 10%, notamment inférieur à 5%, en particulier inférieur à 2%.

6. Matériau fibreux imprégné selon l'une des revendications 1 à 5, **caractérisé en ce que** ledit au moins polymère thermoplastique est sélectionné parmi : les polyaryl éther cétones (PAEK), en particulier le poly(éther éther cétone) (PEEK) ; les polyaryl éther cétone cétone (PAEKK), en particulier le poly(éther cétone cétone) (PEKK) ; les polyéther-imides (PEI) aromatiques ; les polyaryl sulfones, en particulier les polyphénylène sulfones (PPSU) ; les polyarylsulfures, en particulier les polyphénylène sulfures (PPS) ; les polyamides (PA), en particulier polyamides semi-aromatiques (polyphthalamides) éventuellement modifiées par unités urées ; les PEBA, les polyacrylates en particulier le polyméthacrylate de méthyle (PMMA) ; les polyoléfines, en particulier le polypropylène, l'acide polylactique (PLA), l'alcool polyvinylique (PVA), et les polymères fluorés en particulier le polyfluorure de vinylidène (PVDF) ou le polytetrafluoroéthylène (PTFE) ou le polychlorotrifluoroéthylène (PCTFE); et leurs mélanges, notamment un mélange de PEKK et de PEI, de préférence de 90-10% en poids à 60-40% en poids, en particulier de 90-10% en poids à 70-30% en poids.

7. Matériau fibreux imprégné selon l'une des revendications 1 à 6, **caractérisé en ce que** le ledit au moins polymère thermoplastique est sélectionné parmi les polyamides, le PEKK, le PEI et un mélange PEKK et de PEI.

8. Matériau fibreux imprégné selon la revendication 7, **caractérisé en ce que** ledit polyamide est choisi parmi les polyamides aliphatiques, les polyamides cycloaliphatiques et les polyamides semi-aromatiques (polyphthalamides).

9. Matériau fibreux imprégné selon la revendication 8, **caractérisé en ce que** ledit polyamide aliphatique est choisi parmi le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), le polyamide 11/1010, le polyamide 12/1010, ou un mélange de ceux-ci ou un copolyamide de ceux-ci, et les copolymères blocs, notamment polyamide/-polyéther (PEBA),et ledit polyamide semi-aromatique est un polyamide semi-aromatique, éventuellement modifié par des unités urées notamment un MXD6 et un MXD10 ou un polyamide semi-aromatique de formule X/YAr, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques;

X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18, notamment un polyamide de formule A/6T, A/9T, A/10T ou A/11T, A étant tel que défini ci-dessus, en particulier un polyamide PA 6/6T, un PA 66/6T, un PA 6I/6T, un PA MPMDT/6T, un PA PA11/10T, un PA 11/6T/10T, un PA MXDT/10, un PA MPMDT/10T, un PA BACT/10T, un PA BACT/6T, un PA 11/BACT, un PA BACT/10T/6T, un PA MPMDT/6T, un PA PA11/10T, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T.

10. Matériau fibreux imprégné selon l'une des revendications 1 à 9, **caractérisée en ce que** ledit polyamide est un polyamide semi-aromatique choisi parmi un PA MPMDT/6T, un PA PA11/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/10T, PA 11/ BACT/10T, un PA 11/MXDT/10T.

11. Matériau fibreux imprégné selon l'une des revendications 1 à 10, **caractérisé en ce que** ledit matériau fibreux comprend des fibres continues sélectionnées parmi les fibres de carbone, de verre, de carbure de silicium, de basalte, de silice, les fibres naturelles en particulier de lin ou de chanvre, de lignine, de bambou, de sisal, de soie, ou cellulosiques en particulier de viscose, ou les fibres thermoplastiques amorphes de température de transition vitreuse Tg supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou les fibres thermoplastiques semi-cristallines de température de fusion Tf supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou un mélange de deux ou de plusieurs desdites fibres, de préférence un mélange de fibres de carbone, de verre ou de carbure de silicium, en particulier des fibres de carbone.

12. Matériau fibreux imprégné selon l'une des revendications 1 à 11, **caractérisé en ce que** ledit polymère thermoplastique comprend en outre des charges carbonées, en particulier du noir de carbone ou des nanocharges carbonées, de préférence choisies parmi des graphènes, des nanotubes de carbone, des nanofibrilles de carbone ou leurs mélanges.

13. Matériau fibreux imprégné selon l'une des revendications 1 à 12, **caractérisé en ce que** le dit prépolymère thermoplastique comprend en outre des polymères à cristaux liquides ou du poly(butylène téréphtalate) cyclisé, ou des mélanges contenant lesdits polymères à cristaux liquides ou ledit poly(butylène téréphtalate) cyclisé en tant qu'additifs.

14. Matériau fibreux imprégné selon l'une des revendications 1 à 13, **caractérisé en ce qu'**il correspond à un feuillard .

15. Matériau fibreux imprégné selon l'une des revendications 1 à 13, **caractérisé en ce qu'**il correspond à une tape mince.

16. Procédé de préparation d'un matériau fibreux imprégné tel que défini dans l'une des revendications 1 à 15, **caractérisé en ce qu'**il comprend une étape de chauffage du matériau fibreux pré-imprégné et de finalisation de l'imprégnation au moyen d'au moins un système de chauffage muni d'au moins une pièce d'embarrage (E) et optionnellement une étape de mise en forme et de calibration de la mèche ou desdites mèches parallèles d'un matériau fibreux imprégné.

17. Procédé selon la revendication 16, **caractérisé en**

ce que l'étape de mise en forme et de calibration est précédée de ladite étape de chauffage du matériau fibreux pré-imprégné et de finalisation de l'imprégnation.

18. Procédé selon la revendication 16 ou 17, **caractérisé en ce que** l'étape de chauffage d'un matériau fibreux pré-imprégné et de finalisation de l'imprégnation est effectuée avec le même système de chauffage.

19. Procédé selon la revendication 16 ou 17, **caractérisé en ce que** l'étape de chauffage d'un matériau fibreux pré-imprégné et de finalisation de l'imprégnation est effectuée avec deux systèmes de chauffage séparés.

20. Procédé selon l'une des revendications 16 à 19, **caractérisé en ce que** l'étape de chauffage d'un matériau fibreux pré-imprégné et de finalisation de l'imprégnation est précédée d'une étape de pré-imprégnation du matériau fibreux.

21. Procédé selon l'une des revendications 16 à 20, **caractérisé en ce qu'**il comprend les étapes suivantes :

i) Pré-imprégnation d'un matériau fibreux notamment par dépôt de poudre, par voie fondue, notamment par pultrusion, par extrusion en tête d'équerre de polymère fondu, par passage en continu des fibres dans une dispersion aqueuse de poudre polymère ou dispersion aqueuse de particules de polymère ou émulsion ou suspension aqueuse de polymère, par lit fluidisé, équipé ou non d'au moins un embarrage (E'), par projection par buse ou pistolet par voie sèche dans une cuve, équipée ou non d'au moins un embarrage (E') pour obtenir un matériau fibreux pré-imprégné,
ii) étape de chauffage dudit matériau fibreux pré-imprégné et de finalisation de l'imprégnation pour obtenir un matériau fibreux imprégné constitué d'un ruban sous forme de feuillard présentant une épaisseur moyenne inférieure ou égale à 100μm, en particulier comprise de 10μm à 100μm,
iii) optionnellement étape de mise en forme et de calibration de la mèche ou desdites mèches parallèles dudit matériau fibreux imprégné pour obtenir un matériau fibreux imprégné constitué d'un ruban sous forme de tape mince présentant une épaisseur moyenne inférieure ou égale à 100μm, en particulier comprise de 10μm à 100μm.

22. Procédé selon l'une des revendications 16 à 21, **caractérisé en ce qu'**il est effectué à une vitesse d'au moins 10 m/min, en particulier d'au moins 20 m/min, notamment d'au moins 30 m/min.

23. Utilisation d'un matériau fibreux imprégné, tel que défini dans l'une des revendications 1 à 15, pour la préparation de rubans adaptés à la fabrication de pièces composites en trois dimensions, par dépose automatique desdits rubans au moyen d'un robot.

24. Utilisation d'un matériau fibreux imprégné, tel que défini dans l'une des revendications 1 à 15, pour la préparation de feuilles thermoformables.

25. Utilisation selon la revendication 24, **caractérisée en ce que** le matériau fibreux imprégné est prédécoupé en morceaux, lesdits morceaux étant associés au hasard ou orientés pour la préparation de la feuille thermoformable.

**Patentansprüche**

1. Imprägniertes faseriges Material, das mindestens ein faseriges Material aus Endlosfasern sowie Folgendes umfasst:

- mindestens eine Matrix aus nicht reaktionsfähigem thermoplastischem Polymer, oder
- mindestens ein reaktionsfähiges thermoplastisches Präpolymer, das die Vorstufe des nicht reaktionsfähigen thermoplastischen Polymers darstellt, wobei es möglicherweise mit einem Kettenverlängerer vermischt ist, **dadurch gekennzeichnet, dass** es sich bei dem mindestens nicht reaktionsfähigen thermoplastischen Polymer oder dem reaktionsfähigen Präpolymer um ein amorphes Polymer beziehungsweise Präpolymer handelt, dessen Glasübergangstemperatur derart ist, dass Tg ≥ 80 °C, insbesondere Tg ≥ 100 °C, im Besonderen ≥ 120 °C, insbesondere ≥ 140 °C gilt, oder es sich um ein halbkristallines Polymer beziehungsweise Präpolymer handelt, dessen Schmelztemperatur Tf ≥ 150 °C beträgt, wobei Tg und Tf gemäß den Angaben in der Beschreibung gemessen werden, wobei Fasergehalt im vorimprägnierten faserigen Material im Bereich von 45 bis 65 Volumen-%, vorzugsweise 50 bis 60 Volumen-%, insbesondere 54 bis 60 Volumen-% liegt, wobei die mittlere Dicke des imprägnierten faserigen Materials höchstens 100 μm beträgt, unabhängig von der Anzahl an Fasern, die vor der Imprägnierung in dem faserigen Material vorliegen, wobei das faserige Material einlagig ist.

2. Imprägniertes faseriges Material nach Anspruch 1, **dadurch gekennzeichnet, dass** seine mittlere Dicke im Bereich von 10 μm bis 100 μm liegt.

**3.** Imprägniertes faseriges Material nach Anspruch 1 oder 2, **dadurch gekennzeichnet, dass** die Anzahl an Fasern in dem faserigen Material, was Kohlenstofffasern betrifft, mindestens 12K beträgt, wobei sie im Besonderen aus 12K, 24K, 48, 50K und 400K, insbesondere 12K, 24K, 48 und 50K ausgewählt ist, oder die Feinheit, was die Glasfaser betrifft, mindestens 1200 Tex, insbesondere mindestens 2400 tex, mindestens 4800 Tex beträgt.

**4.** Imprägniertes faseriges Material nach einem der Ansprüche 1 bis 3, **dadurch gekennzeichnet, dass** die Fasern des faserigen Materials nicht beschlichtet sind.

**5.** Imprägniertes faseriges Material nach einem der Ansprüche 1 bis 4, **dadurch gekennzeichnet, dass** der Porositätsgrad des imprägnierten faserigen Materials weniger als 10%, insbesondere weniger als 5%, im Besonderen weniger als 2% beträgt.

**6.** Imprägniertes faseriges Material nach Anspruch 1 bis 5, **dadurch gekennzeichnet, dass** das mindestens thermoplastische Polymer aus den folgenden ausgewählt ist: Polyaryletherketonen (PAEK), im Besonderen Polyetheretherketon (PEEK); Polyaryletherketonketon (PAEKK), im Besonderen Polyetherketonketon (PEKK); aromatischen Polyetherimiden (PEI); Polyarylsulfonen, im Besonderen Polyphenylensulfonen (PPSU); Polyarylsulfiden, im Besonderen Polyphenylensulfiden (PPS); Polyamiden (PA), im Besonderen teilaromatischen Polyamiden (Polyphthalamiden), die möglicherweise mit mit Harnstoffeinheiten modifiziert sind; PEBA, Polyacrylaten, im Besonderen Polymethylmethacrylat (PMMA) ; Polyolefinen, im Besonderen Polypropylen, Polymilchsäure (PLA), Polyvinylalkohol (PVA), und Fluorpolymeren, im Besonderen Polyvinylidenfluorid (PVDF) oder Polytetrafluorethylen (PTFE) oder Polychlortrifluorethylen (PCTFE); und deren Mischungen, insbesonderen einer Mischung aus PEKK und PEI, vorzugsweise von 90 bis 10 Gewichts-% bis zu 60 bis 40 Gewichts-%, im Besonderen von 90 bis 10 Gewicht-% bis zu 70 bis 30 Gewichts-%.

**7.** Imprägniertes faseriges Material nach einem der Ansprüche 1 bis 6, **dadurch gekennzeichnet, dass** das mindestens thermoplastische Material aus den Polyamiden, PEKK, PEI und einer Mischung von PEKK und PEI ausgewählt ist.

**8.** Imprägniertes faseriges Material nach Anspruch 7, **dadurch gekennzeichnet, dass** das Polyamid aus den aliphatischen Polyamiden, den cycloaliphatischen Polyamiden und den halbaromatischen Polyamiden (Polyphthalamiden) ausgewählt ist.

**9.** Imprägniertes faseriges Material nach Anspruch 8, **dadurch gekennzeichnet, dass** das aliphatische Polyamid aus Polyamid 6 (PA-6), Polyamid 11 (PA-11), Polyamid 12 (PA-12), Polyamid 66 (PA-66), Polyamid 46 (PA-46), Polyamid 610 (PA-610), Polyamid 612 (PA-612), Polyamid 1010 (PA-1010), Polyamid 1012 (PA-1012), Polyamid 11/1010, Polyamid 12/1010 oder einer Mischung daraus oder einem Copolyamid davon, und den Blockcoppolymeren, insbesondere Polyamid/Polyether (PEBA), ausgewählt ist, und es sich bei dem halbaromatischen Polyamid um ein halbaromatisches Polyamid handelt, das möglicherweise mit Harnstoffeinheiten modifiziert ist, insbesondere um ein MXD6 und ein MXD10 oder um ein halbaromatisches Polyamid der Formel X/YAr, insbesondere um ein halbaromatisches Polyamid der Formel A/XT, wobei A aus einem Baustein, der ausgehend von einer Aminosäure erhalten wird, einem Baustein, der ausgehend von einem Lactam erhalten wird, und einem Baustein ausgewählt ist, welcher der Formel (Ca-Diamin) (Cb-Disäure) entspricht, wobei a für die Anzahl an Kohlenstoffatomen des Diamins steht und b für die Anzahl an Kohlenstoffatomen der Disäure steht, wobei a und b jeweils im Bereich von 4 bis 36, vorteilhafterweise von 9 bis 18 liegen, wobei der Baustein (Ca-Diamin) aus den aliphatischen Diaminen geradkettiger oder verzweigter Art, den cycloaliphatischen Diaminen und den alkylaromatischen Diaminen ausgewählt ist und der Baustein (Cb-Disäure) aus den aliphatischen Disäuren geradkettiger oder verzweigter Art, den cycloaliphatischen Disäuren und den aromatischen Disäuren ausgewählt ist; X.T bezeichnet einen Baustein, der ausgehend von der Polykondensation eines Cx-Diamins und von Terephthalsäure erhalten wird, wobei x für die Anzahl an Kohlenstoffatomen des Cx-Diamins steht, wobei x im Bereich von 6 bis 36, vorzugsweise von 9 bis 18 liegt, wobei es sich insbesondere um ein Polyamid der Formel A/6T, A/9T, A/10T oder A/11T handelt, wobei A der obigen Begriffsbestimmung entspricht, im Besonderen um ein Polyamid PA 6/6T, ein PA 66/6T, ein PA 6I/6T, ein PA MPMDT/6T, ein PA PA11/10T, ein PA 11/6T/10T, ein PA MXDT/10, ein PA MPMDT/10T, ein PA BACT/10T, ein PA BACT/6T, ein PA 11/BACT, ein PA BACT/10T/6T, ein PA MPMDT/6T, ein PA PA11/10T, ein PA 11/6T/10T, ein PA MXDT/10T, ein PA MPMDT/10T, ein PA BACT/10T, ein PA BACT/6T, PA BACT/10T/6T, ein PA 11/BACT/6T, PA 11/MPMDT/10T, PA 11/BACT/10T, ein PA 11/MXDT/10T.

**10.** Imprägniertes faseriges Material nach einem der Ansprüche 1 bis 9, **dadurch gekennzeichnet, dass** es sich bei dem Polyamid um ein halbaromatisches Polyamid handelt, das aus einem PA MPMDT/6T, einem PA PA11/10T, einem PA 11/BACT, einem PA 11/6T/10T, einem PA MXDT/10T, einem PA MPMDT/10T, einem PA BACT/10T, einem PA BACT/6T, PA BACT/10T/6T, einem PA 11/BACT/6T, PA 11/MPMDT/10T, PA 11/BACT/10T, einem PA 11/MXDT/10T ausgewählt ist.

11. Imprägniertes faseriges Material nach einem der Ansprüche 1 bis 10, **dadurch gekennzeichnet, dass** das faserige Material Endlosfasern umfasst, die aus Kohlenstoff-, Glas-, Siliciumcarbid-, Basalt-, Siliciumdioxidfasern, Naturfasern im Besonderen aus Leinen oder Hanf, aus Lignin, Bambus, Sisal, Seide, oder celluloseartigen Stoffen im Besonderen aus Viscose, oder aus amorphen thermoplastischen Fasern mit einer Glasübergangstemperatur Tg, welche höher als die Tg des Polymers oder der Polymermischung, wenn letztere(s) amorpher Natur ist, oder höher als die Tf des Polymers oder der Polymermischung ist, wenn letztere(s) halbkristalliner Natur ist, oder aus halbkristallinen thermoplastischen Fasern mit einer Schmelztemperatur Tf, welche höher als die Tg des Polymers oder der Polymermischung, wenn letztere(s) amorpher Natur ist, oder höher als die Tf des Polymer oder der Polymermischung ist, wenn letztere(s) halbkristalliner Natur ist, oder aus einer Mischung von zwei oder mehreren dieser Fasern, vorzugsweise einer Mischung von Kohlenstoff-, Glas- oder Siliciumcarbidfasern, im Besonderen aus Kohlenstofffasern ausgewählt sind.

12. Imprägniertes faseriges Material nach einem der Ansprüche 1 bis 11, **dadurch gekennzeichnet, dass** das thermoplastische Polymer darüber hinaus kohlenstoffartige Füllstoffe, im Besonderen Ruß oder kohlenstoffartige Nanofüllstoffe umfasst, welche vorzugweise aus Graphenen, Kohlenstoffnanoröhren, Kohlenstoffnanofibrillen oder deren Mischungen ausgewählt sind.

13. Imprägniertes faseriges Material nach einem der Ansprüche 1 bis 12, **dadurch gekennzeichnet, dass** das thermoplastische Präpolymer darüber hinaus Polymere mit Flüssigkristallen oder zyklisiertes Polybutylenterephthalat oder Mischungen umfasst, welche die Polymere mit Flüssigkristallen oder das zyklisierte Polybutylenterephthalat als Zusatzstoffe enthalten.

14. Imprägniertes faseriges Material nach einem der Ansprüche 1 bis 13, **dadurch gekennzeichnet, dass** es einem Bandmaterial entspricht.

15. Imprägniertes faseriges Material nach einem der Ansprüche 1 bis 13, **dadurch gekennzeichnet, dass** es einem dünnen Band entspricht.

16. Verfahren zur Herstellung eines imprägnierten faserigen Materials gemäß der Begriffsbestimmung in einem der Ansprüche 1 bis 15, **dadurch gekennzeichnet, dass** es einen Schritt des Erhitzens des vorimprägnierten faserigen Materials und des Abschließens der Imprägnierung mittels eines Heizsystems, welches mit mindestens einem Streckwerk (E) versehen ist, und möglicherweise einen Schritt des Formens und Kalibrierens des Rovings oder der parallel verlaufenden Rovings eines imprägnierten faserigen Materials umfasst.

17. Verfahren nach Anspruch 16, **dadurch gekennzeichnet, dass** dem Schritt des Formens und Kalibrierens der Schritt des Erhitzens des vorimprägnierten faserigen Materials und des Abschließen des Imprägnierens vorangeht.

18. Verfahren nach Anspruch 16 oder 17, **dadurch gekennzeichnet, dass** der Schritt des Erhitzens eines vorimprägnierten faserigen Materials und des Abschließens des Imprägnierens mit ein und demselben Heizsystem durchgeführt wird.

19. Verfahren nach Anspruch 16 oder 17, **dadurch gekennzeichnet, dass** der Schritt des Erhitzens eines vorimprägnierten faserigen Materials und des Abschließens des Imprägnierens mit zwei gesonderten Heizsystemen durchgeführt wird.

20. Verfahren nach einem der Ansprüche 16 bis 19, **dadurch gekennzeichnet, dass** dem Schritt des Erhitzens eines vorimprägnierten faserigen Materials und des Abschließens des Imprägnierens ein Schritt des Vorimprägnierens des faserigen Materials vorangeht.

21. Verfahren nach einem der Ansprüche 16 bis 20, **dadurch gekennzeichnet, dass** es die folgenden Schritte umfasst:

i) Vorimprägnieren eines faserigen Materials, insbesondere durch Aufbringen von Pulver, im Schmelzverfahren, insbesondere mittels Pultrusion, indem das geschmolzene Polymer winkelkopfseitig extrudiert wird, die Fasern unter Einsatz eines Fließbetts, das mit mindestens einer Streckvorrichtung (E') versehen sein kann aber nicht muss, kontinuierlich durch eine wässrige Dispersion von Polymerpulver oder eine wässrige Dispersion von Polymerpartikeln oder eine wässrige Polymeremulsion oder -suspension geführt werden, ein Spritzen auf trockenem Wege mittels Düse oder Pislole in einen Behälter erfolgt, der mit mindestens einer Streckvorrichtung (E') versehen sein kann aber nicht muss, um ein vorimprägniertes faseriges Material zu erhalten,

ii) Schritt des Erhitzens des vorimprägnierten Materials und des Abschließens des Imprägnierens, um ein imprägniertes faserartiges Material zu erhalten, das aus einem Band in Form eines Bandmaterials besteht, welches eine mittlere Dicke aufweist, die höchstens 100 μm beträgt, wobei sie im Besonderen im Bereich von 10 μm bis 100 μm liegt,

iii) möglicherweise, Schritt des Formens und Kalibrierens des Rovings oder der parallel verlaufenden Rovings des imprägnierten faserigen Materials, um ein imprägniertes faseriges Material zu erhalten, das aus einem Band in Form eines dünnen Bandes besteht, welches eine mittlere Dicke aufweist, die höchstens 100 μm beträgt, wobei sie im Besonderen im Bereich zwischen 10 μm und 100 μm liegt.

22. Verfahren nach einem der Ansprüche 16 bis 21, **dadurch gekennzeichnet, dass** es mit einer Geschwindigkeit von mindestens 10 m/min., im Besonderen von mindestens 20 m/min., insbesondere von mindestens 30 m/min. durchgeführt wird.

23. Verwendung eines imprägnierten faserigen Materials, gemäß den Begriffsbestimmungen in einem der Ansprüche 1 bis 15, zur Herstellung von Bändern, die sich zur Fertigung von dreidimensionalen Verbundstoffteilen eignen, indem die Bänder mittels eines Roboters automatisch aufgebracht werden.

24. Verwendung eines imprägnierten faserigen Materials, gemäß den Begriffsbestimmungen in einem der Ansprüche 1 bis 15, zur Herstellung thermoformbarer Blätter.

25. Verwendung nach Anspruch 24, **dadurch gekennzeichnet, dass** das imprägnierte faserige Material im Vorfeld in Stücke geschnitten wird, wobei die Stücke zufällig zusammengefügt oder ausgerichtet werden, um das thermoformbare Blatt herzustellen.

**Claims**

1. Impregnated fibrous material comprising at least one continuous-fibre fibrous material and:

   - at least one matrix of nonreactive thermoplastic polymer, or
   - at least one reactive thermoplastic prepolymer, precursor of said nonreactive thermoplastic polymer, optionally mixed with a chain extender, **characterized in that** said at least nonreactive thermoplastic polymer or said reactive prepolymer is an amorphous polymer or prepolymer having a glass transition temperature such that $Tg \geq 80°C$, especially $Tg \geq 100°C$, in particular $\geq$ 120°C, especially $\geq 140°C$, or is a semicrystalline polymer or prepolymer having a melting temperature $Tm$ of $\geq 150°C$, where $Tg$ and $Tm$ are measured as indicated in the description, the fibre content in said preimpregnated fibrous material being from 45% to 65% by volume, preferably from 50% to 60% by volume, especially from 54% to 60%, the average thickness of said impregnated fibrous material being less than or equal to 100 μm, independently of the number of fibres present in said fibrous material before impregnation, said fibrous material comprising a single layer.

2. Impregnated fibrous material according to Claim 1, **characterized in that** the average thickness thereof is from 10 μm to 100 μm.

3. Impregnated fibrous material according to Claim 1 or 2, **characterized in that** the number of fibres in said fibrous material for carbon fibres is greater than or equal to 12K, in particular selected from 12K, 24K, 48K, 50K and 400K, especially 12K, 24K, 48K and 50K, or the grammage for the glass fibre is greater than or equal to 1200 tex, especially greater than or equal to 2400 tex, or greater than or equal to 4800 tex.

4. Impregnated fibrous material according to one of Claims 1 to 3, **characterized in that** the fibres of the fibrous material are not sized.

5. Impregnated fibrous material according to one of Claims 1 to 4, **characterized in that** the degree of porosity in said impregnated fibrous material is less than 10%, especially less than 5%, in particular less than 2%.

6. Impregnated fibrous material according to one of Claims 1 to 5, **characterized in that** said at least thermoplastic polymer is selected from: polyaryl ether ketones (PAEKs), in particular poly(ether ether ketone) (PEEK); polyaryl ether ketone ketones (PAEKKs), in particular poly(ether ketone ketone) (PEKK); aromatic polyetherimides (PEIs); polyaryl sulfones, in particular polyphenylene sulfones (PPSUs); polyaryl sulfides, in particular polyphenylene sulfides (PPSs); polyamides (PAs), in particular semiaromatic polyamides (polyphthalamides) optionally modified by urea units; PEBAs; polyacrylates, in particular polymethyl methacrylate (PMMA); polyolefins, in particular polypropylene; polylactic acid (PLA); polyvinyl alcohol (PVA); fluoropolymers, in particular polyvinylidene fluoride (PVDF) or polytetrafluoroethylene (PTFE) or polychlorotrifluoroethylene (PCTFE); and mixtures thereof, especially a mixture of PEKK and PEI, preferably from 90-10% by weight to 60-40% by weight, in particular from 90-10% by weight to 70-30% by weight.

7. Impregnated fibrous material according to one of Claims 1 to 6, **characterized in that** said at least thermoplastic polymer is selected from polyamides, PEKK, PEI and a mixture of PEKK and PEI.

8. Impregnated fibrous material according to Claim 7, **characterized in that** said polyamide is selected from aliphatic polyamides, cycloaliphatic polyamides and semiaromatic polyamides (polyphthalamides).

9. Impregnated fibrous material according to Claim 8, **characterized in that** said aliphatic polyamide is selected from polyamide 6 (PA-6), polyamide 11 (PA-11), polyamide 12 (PA-12), polyamide 66 (PA-66), polyamide 46 (PA-46), polyamide 610 (PA-610), polyamide 612 (PA-612), polyamide 1010 (PA-1010), polyamide 1012 (PA-1012), polyamide 11/1010, polyamide 12/1010 or a mixture thereof or a copolyamide thereof, and block copolymers, especially polyamide/polyether (PEBA), and that said semiaromatic polyamide is a semiaromatic polyamide, optionally modified with urea units, especially polyamide MXD6 and MXD10 or a semiaromatic polyamide of formula X/YAr, especially a semiaromatic polyamide of formula A/XT wherein A is selected from a structural element obtained from an amino acid, a structural element obtained from a lactam and a structural element of the formula (Ca-diamine)-(Cb-diacid), with a representing the number of carbon atoms of the diamine and b representing the number of carbon atoms in the diacid, a and b each being between 4 and 36, advantageously between 9 and 18, the structural element (Ca-diamine) being selected from linear or branched aliphatic diamines, cycloaliphatic diamines and alkylaromatic diamines, and the structural element (Cb-diacid) is selected from linear or branched aliphatic diacids, cycloaliphatic diacids and aromatic diacids;
X.T denotes a structural element obtained from the polycondensation of a Cx diamine and terephthalic acid, with x representing the number of carbon atoms in the Cx diamine, x being between 6 and 36, advantageously between 9 and 18, especially a polyamide of formula A/6T, A/9T, A/10T or A/11T, and A being as defined above, in particular a polyamide 6/6T, a PA 66/6T, a PA 6I/6T, a PA MPMDT/6T, a PA PA11/10T, a PA 11/6T/10T, a PA MXDT/10, a PA MPMDT/10T, a PA BACT/10T, a PA BACT/6T, a PA 11/BACT, a PA BACT/10T/6T, a PA MPMDT/6T, a PA PA11/10T, a PA 11/6T/10T, a PA MXDT/10T, a PA MPMDT/10T, a PA BACT/10T, a PA BACT/6T, PA BACT/10T/6T, a PA 11/BACT/6T, PA 11/MPMDT/10T, PA 11/BACT/10T or a PA 11/MXDT/10T.

10. Impregnated fibrous material according to one of Claims 1 to 9, **characterized in that** said polyamide is a semiaromatic polyamide selected from a PA MPMDT/6T, a PA PA11/10T, a PA 11/BACT, a PA 11/6T/10T, a PA MXDT/10T, a PA MPMDT/10T, a PA BACT/10T, a PA BACT/6T, PA BACT/10T/6T, a PA 11/BACT/6T, PA 11/MPMDT/10T, PA 11/BACT/10T or a PA 11/MXDT/10T.

11. Impregnated fibrous material according to one of Claims 1 to 10, **characterized in that** said fibrous material comprises continuous fibres selected from carbon fibres, glass fibres, silicon carbide fibres, basalt fibres, silica fibres, natural fibres, in particular flax or hemp fibres, lignin fibres, bamboo fibres, sisal fibres, silk fibres, or cellulose fibres, in particular viscose fibres, or amorphous thermoplastic fibres having a glass transition temperature Tg above the Tg of said polymer or of said mixture of polymers when the latter is amorphous or above the Tm of said polymer or of said mixture of polymers when the latter is semicrystalline, or semicrystalline thermoplastic fibres having a melting temperature Tm above the Tg of said polymer or of said mixture of polymers when the latter is amorphous or above the Tm of said polymer or of said mixture of polymers when the latter is semicrystalline, or a mixture of two or more of said fibres, preferably a mixture of carbon, glass or silicon carbide fibres, in particular carbon fibres.

12. Impregnated fibrous material according to one of Claims 1 to 11, **characterized in that** said thermoplastic polymer further comprises carbon-based fillers, in particular carbon black or carbon-based nanofillers, preferably selected from graphenes, carbon nanotubes, carbon nanofibrils or mixtures thereof.

13. Impregnated fibrous material according to one of Claims 1 to 12, **characterized in that** said thermoplastic prepolymer further comprises liquid crystal polymers or cyclized poly(butylene terephthalate), or mixtures containing said liquid crystal polymers or said cyclized poly(butylene terephthalate) as additives.

14. Impregnated fibrous material according to one of Claims 1 to 13, **characterized in that** it corresponds to a strip.

15. Impregnated fibrous material according to one of Claims 1 to 13, **characterized in that** it corresponds to a thin tape.

16. Process for preparing an impregnated fibrous material as defined in one of Claims 1 to 15, **characterized in that** it comprises a step of heating the preimpregnated fibrous material and completing the impregnation by means of at least one heating system provided with at least one tensioning device (E) and optionally a step of shaping and calibrating the roving or said parallel rovings of an impregnated fibrous material.

17. Process according to Claim 16, **characterized in that** the shaping and calibration step is preceded by said step of heating the preimpregnated fibrous material and completing the impregnation.

18. Process according to Claim 16 or 17, **characterized in that** the step of heating a preimpregnated fibrous material and completing the impregnation is carried out using the same heating system.

19. Process according to Claim 16 or 17, **characterized in that** the step of heating a preimpregnated fibrous material and completing the impregnation is carried out using two separate heating systems.

20. Process according to one of Claims 16 to 19, **characterized in that** the step of heating a preimpregnated fibrous material and completing the impregnation is preceded by a step of preimpregnating the fibrous material.

21. Process according to one of Claims 16 to 20, **characterized in that** it comprises the following steps:

   (i) preimpregnating a fibrous material, especially by powder deposition, by the molten route, especially by pultrusion, by crosshead extrusion of molten polymer, by continuous passage of the fibres through an aqueous dispersion of polymer powder or aqueous dispersion of polymer particles or aqueous polymer emulsion or suspension, by means of a fluidized bed optionally equipped with at least one tensioning device (E'), by spraying with a nozzle or spray gun by the dry route into a tank optionally equipped with at least one tensioning device (E') to obtain a preimpregnated fibrous material,
   (ii) step of heating said preimpregnated fibrous material and completing the impregnation to obtain an impregnated fibrous material consisting of a ribbon in the form of a strip having an average thickness of less than or equal to 100 $\mu$m, in particular from 10 $\mu$m to 100 $\mu$m,
   (iii) optionally a step of shaping and calibrating the roving or said parallel rovings of said impregnated fibrous material to obtain an impregnated fibrous material consisting of a ribbon in the form of a thin tape having an average thickness of less than or equal to 100 $\mu$m, in particular from 10 $\mu$m to 100 $\mu$m.

22. Process according to one of Claims 16 to 21, **characterized in that** it is carried out at a speed of at least 10 m/min, in particular at least 20 m/min, especially at least 30 m/min.

23. Use of an impregnated fibrous material, as defined in one of Claims 1 to 15, for preparing ribbons suitable for the production of three-dimensional composite parts, by automated layup of said ribbons using a robot.

24. Use of an impregnated fibrous material, as defined in one of Claims 1 to 15, for preparing thermoformable sheets.

25. Use according to Claim 24, **characterized in that** the impregnated fibrous material is precut into pieces, said pieces being randomly associated or oriented for the preparation of the thermoformable sheet.

**FIG.1**

Angle
$\alpha_1$

24

Lit fluidisé

Entrée d'air

FIG.2

**FIG.3**

FIG.4

181 μm

FIG.5

Fig.6

40

45

Gorgé 12.7 mm
Ø 13 mm

IR

CALANDRES

41

Ø 20 mm    42

Ø 20 mm    43

Gorgé 12.7 mm
Ø 13 mm    44

46

**Fig.7**

## Fig.8

**Fig.9**

**Fig.10**

**EP 3 768 768 B1**

**Documents brevets cités dans la description**

- WO 2012066241 A2
- US 20140005331 A1
- EP 0324680 A
- EP 0406067 A
- EP 0201367 A
- WO 2016062896 A
- WO 2015121583 A
- EP 1505099 A